# EUROPÄISCHE PATENTSCHRIFT

(11) **EP 3 849 771 B1**
(45) Veröffentlichungstag und Bekanntmachung des Hinweises auf die Patenterteilung: **02.11.2022**
(21) Anmeldenummer: 19756379.4
(22) Anmeldetag: 27.08.2019
(51) Int. Cl.: B29C 45/73, B29C 45/14, B29C 33/02, B29L 31/30

(54) **DYNAMISCH TEMPERIERTES FOLIEN-HINTERSPRITZEN**
DYNAMICALLY THERMALLY CONDITIONED BACK INJECTION OF FILMS
SURMOULAGE DE FEUILLE TEMPÉRÉ DYNAMIQUE PAR INJECTION

(30) Priorität: 10.09.2018 EP 18193377
(43) Veröffentlichungstag der Anmeldung: 21.07.2021
(73) Patentinhaber: Covestro Intellectual Property GmbH & Co. KG, 51373 Leverkusen (DE)
(72) Erfinder: KUENZEL, Roland, 51381 Leverkusen (DE); CAPELLEN, Peter, 47803 Krefeld (DE); GRIMM, Thomas, 50765 Köln (DE)
(74) Vertreter: Levpat
(86) Internationale Anmeldenummer: PCT/EP2019/072735
(87) Internationale Veröffentlichungsnummer: WO 2020/052955

(56) Entgegenhaltungen:
- EP-A1- 3 025 603
- EP-A1- 3 187 322
- EP-A2- 1 873 693
- EP-A2- 2 842 763
- WO-A1-2014/076061
- DE-A1-102007 034 170
- DE-A1-102009 027 646

## Beschreibung

Die vorliegende Erfindung betrifft ein Verfahren zur Herstellung eines Spritzgusselementes mit einer Vorderseite und einer Rückseite, wobei auf der Vorderseite des Spritzgusselementes ein Folienelement bündig zur Oberfläche einer Hinterspritzschicht angeordnet ist. Die Erfindung betrifft weiterhin ein durch das Verfahren erhältliche Spritzgusselement sowie die Verwendung eines Formwerkzeugs zur Durchführung des Verfahrens.

Es ist üblich, Spritzgussteile mit Folien für zusätzliche Funktionalitäten auszustatten. Beispielsweise werden Verscheibungselemente aus Kunststoffmaterial mit Heizfolien versehen, um ein einfaches, komfortables Abtauen von Scheiben/Verkleidungselementen im Winter zu ermöglichen, etwa bei Front- und Heckscheiben oder -paneelen für Fahrzeuge.

Bei transparenten Spritzgussteilen wurde die Folie bisher bevorzugt auf der Rückseite des Spritzgussteils aufgebracht. Dieses hat mehrere Gründe: Es ergibt sich häufig hierdurch ein ansprechender optischer Tiefeneffekt. Der Folienrand, wenn die Folie nur in einem Teilbereich aufgebracht ist, lässt sich auf der Rückseite des Spritzgussteils besser verbergen. Auch kann es geschehen, dass an der Folie Partikel, schon feinste Staubpartikel genügen hier, anhaften, die bei einer späteren Lackierung der Sichtseite zu Störstellen führen würden, was ein zusätzlicher Grund ist, die Folie auf der Rückseite des Spritzgussteils vorzusehen. Generell gilt, dass es bei optischen Anwendungen eine sehr große Herausforderung ist, die Folieninserts vor dem Hinterspritzen zu reinigen, sodass es keine Fehlstellen am Spritzgussartikel gibt. Der Vorteil von in Teilbereichen der Hinterspritzschicht eingesetzten Folien ist, dass diese eine kleinere Fläche aufweisen als Folien, die sich über die gesamte Fläche des Spritzgussteils erstrecken, wodurch das Handling der Folie, insbesondere nach Abziehen der Schutz- oder Kaschierfolien, vereinfacht und das Risiko von Anhaftungen reduziert wird. Weiterhin besteht bei der Verwendung partieller Folien die Möglichkeit, mehrere Folien mit unterschiedlichen Funktionalitäten in einem Bauteil zu integrieren.

Beispielsweise wurde, etwa bei Verscheibungselementen und Abdeckungen für SensorTechnik, in der Vergangenheit eine Heizfolie teilweise über die gesamte Fläche auf der Rückseite des Spritzgussteils angeordnet, so z.B. beschrieben in der DE 102015004204 A1. Auch eine Anbringung in Teilbereichen auf der Rückseite ist beschrieben, etwa in der DE 102012105564 A1. Die Anordnung auf der Rückseite ist jedoch nicht besonders energieeffizient und der Abtauprozess benötigt verhältnismäßig viel Zeit. Es besteht also diesbezüglich Optimierungsbedarf. Je nach Eisdecke, Wetterlage und Dicke der überdeckenden Kunststoffschicht ist die erzielbare Heizleistung bei einer Positionierung der Heizfolie an der Bauteilrückseite auch nicht ausreichend, um ein Abtauen der Eisschicht zu ermöglichen. Insbesondere auch bei Frontpanelen im Automobilbereich mit integrierter Sensortechnologie, z.B. LiDAR-Sensoren oder Radar-Sensoren, wird die Heizfunktion also an der Außenseite des Bauteils benötigt, um die äußere Oberfläche bei niedrigen Temperaturen eisfrei zu halten. Hier ist daher, wie auch bei anderen Anwendungen aus anderen Gründen, eine Anordnung der Folie auf der Vorderseite des Spritzgussteils, die Seite, die in der Endanwendung sichtbar ist, der "Sichtseite", wünschenswert.

Bisher hat man die Folie bei einer Platzierung auf der Vorderseite, d.h. der Sichtseite, des Spritzgussteils vorzugsweise vollflächig aufgebracht, um zu verhindern, dass der Folienrand mitten in der Fläche des Bauteils zu erkennen ist. Dieses wäre insbesondere bei Verscheibungselementen für Fahrzeuge störend, wo der Übergang im Sichtfeld des Fahrers liegen könnte. Eine vollflächige Anbringung der Folie hat jedoch den Nachteil, dass, je nach Bauteilgröße, auch sehr große Folienstücke benötigt werden, die entsprechend teuer sind. Mit zunehmender Größe der Folie steigt außerdem das Risiko, Ausschuss zu produzieren, da die Komplexität im Handling der Folie, auch der Anspruch beim Positionieren der Folie im Werkzeug, stark ansteigen.

Eine örtlich stark begrenzte Aufbringung einer Folie mit gewisser Dicke, d.h. nicht vollflächig, bedeutet aber sichtbare Übergänge, insbesondere nach Beschichtung. Sofern in einen Teilbereich der Sichtseite eines Spritzgusselementes eine funktionale Folie mit einer Dicke von etwa 20 µm und mehr integriert werden soll, besteht das Problem, dass es zu optischen Störstellen kommt. Im Grenzbereich zwischen Hinterspritzschicht, d.h. der Schicht aus spritzgegossenem Kunststoffmaterial, und dem Halbzeug verbliebe eine Lücke. Insbesondere bei einer späteren Beschichtung wäre dieser Fehler gut erkennbar, da es im Kerbenbereich zu Lackverlaufsstörungen, insbesondere einer Lackanhäufung mit der Gefahr einer Rissbildung käme. Auch ohne Beschichtung zeigt sich eine solche Unebenheit in der Bauteiloberfläche aber deutlich.

Um bei einer nicht vollflächigen Folie trotzdem attraktive Spritzgussteile zu erhalten, hat man daher teilweise nach Lösungen gesucht, die aber bisher keine tatsächliche Lösung des Problems, nämlich eine Beseitigung des unschönen Übergangsbereiches zwischen Folie und Substratmaterial, liefern, sondern vielmehr den bestehenden Mangel ausnutzen, etwa wie in EP 3 025 603 A1 beschrieben, wo bewusst mit einem visuellen Unterschied zwischen der Folie und dem restlichen Formteil gearbeitet wird. Hier weist zudem das Element, das hinterspritzt wird, bereits einen Hardcoat auf, so dass eine nachträgliche Lackierung, bei der Unebenheiten bzw. Übergänge hervorgehoben werden, nicht mehr erforderlich ist. Die Aufbringung einer solchen Lackierung wäre nachträglich auch gar nicht mehr mit einem vernünftigen Ergebnis möglich, da sich zwischen dem Folieneinleger und Formteil, wie zuvor beschrieben, ein Spalt bildet.

EP 3 187 322 A1 offenbart unter anderem ein Verfahren zum Einbetten eines Etiketts, das im Wesentlichen aus einem Papiersubstrat besteht, das elektronische Tinten und/oder eine gedruckte elektronische Schaltung und/oder Vorrichtung trägt (wodurch eine papierbasierte Schaltung erreicht wird), direkt in ein geformtes Kunststoffteil (auch als Kunststoffobjekt bezeichnet), wobei das Einbetten der papierbasierten Schaltung und die Herstellung des Kunststoffteils in einem einzigen Arbeitsgang erfolgen.

In der WO 2014/076061 A1 wird ein Spritzgussteil, ein entsprechendes Spritzgussverfahren und eine Form dafür offenbart. Das Spritzgussteil weist einen Grundkörper aus mindestens einem thermoplastischen Kunststoff auf, der faserfrei, geschäumt oder ein kurz- oder langfaserverstärkter Kunststoff ist, wobei erfindungsgemäß streifen- oder schichtförmige Verstärkungselemente aus einem endlosfaserverstärkten thermoplastischen Kunststoff fugenlos in oder an dem Grundkörper ausgebildet sind, wobei der mindestens eine thermoplastische Kunststoff des Grundkörpers und der endlosfaserverstärkte thermoplastische Kunststoff überlappende Verarbeitungstemperaturbereiche aufweisen.

DE 10 2007 034 170 A1 offenbart ein Verfahren zur Herstellung eines dreidimensionalen Gestaltungselements, insbesondere zur Herstellung eines Markenemblems oder einer Markenplakette, in wenigen Schritten auf einfache und elegante Weise.

EP 2 842 763 A2 beschreibt ein Bildherstellungsverfahren, eine Dekorfolie, ein Dekorfolienformteil, ein Verfahren zur Herstellung eines Formteils, ein Formteil und einen Tintenset.

EP 1 873 693 A2 betrifft ein "In-Mold"-Oberflächenelement mit einem flächigen Grundträger und einem Kennzeichnungselement sowie einen Spritzgussartikel.

DE 10 2009 027 646 A1 offenbart eine Vorrichtung und ein Verfahren zur Herstellung von dickwandigen Kunststoffformteilen durch Spritzgießen oder Prägen. Die Vorrichtung umfasst ein Werkzeug zum Spritzgießen oder Prägen mit einer Kavität und ist dadurch gekennzeichnet, dass das Werkzeug einen an die Kavität angrenzenden Wandbereich und einen von der Kavität abgewandten, an den Wandbereich nahe der Kavität anschließenden Körper umfasst, wobei der Körper des Werkzeugs auf eine Temperatur T eingestellt ist und der Wandbereich auf eine von der Temperatur T verschiedene Temperatur T einstellbar ausgebildet ist.

Aufgabe war es somit, ein Spritzgusselement und ein Verfahren zu seiner Herstellung bereitzustellen, in dessen einer Seite, vorzugsweise der Sichtseite, in einem Teilbereich ein Folienelement mit einer Mindestdicke von 20 µm integriert ist, bei dem der Übergangsbereich zwischen Hinterspritzschicht und Folienelement nahezu nicht erkennbar, optisch und fühlbar, möglichst gar nicht erkennbar, ist und das daher entsprechend möglichst eine störstellenfreie Lackierung zulässt.

Erfindungsgemäß gelöst wird die Aufgabe durch ein Verfahren gemäß Anspruch 1, ein Spritzgusselement gemäß Anspruch 8 und Verwendung eines Formwerkzeug gemäß Anspruch 10. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung eines Spritzgusselementes mit einer Vorderseite und einer Rückseite, wobei auf der Vorderseite des Spritzgusselementes ein Folienelement bündig zur Oberfläche einer Hinterspritzschicht angeordnet ist,
wobei das Folienelement einen Rand aufweist und einen inneren Randbereich definiert, welcher sich von dem Rand bis zu einer vorbestimmten Strecke d1, welche rechtwinklig zu dem Rand in Richtung des Folienelements verläuft, erstreckt, wobei d1 ≥1% der Breite des Folienelements und kleiner als die halbe Breite des Folienelements ist,
umfasst die folgenden Schritte in dieser Reihenfolge:
   - Bereitstellen eines Formwerkzeuges, das im geschlossenen Zustand zwischen einer ersten Werkzeughälfte, welche die Vorderseite des Spritzgusselementes abbildet, und einer zweiten Werkzeughälfte, welche die Rückseite des Spritzgusselementes abbildet, eine komplementär zu dem Spritzgusselement ausgebildete Kavität definiert,
   - Einlegen des Folienelementes in die erste Werkzeughälfte,
   - Schließen des Formwerkzeuges,
   - Einspritzen eines plastifizierten thermoplastischen Kunststoffmaterials in die Kavität zur Ausbildung einer Hinterspritzschicht,
   - Erstarrenlassen des Kunststoffmaterials,
   - Öffnen des Formwerkzeuges und
   - Entnahme des Spritzgusselementes.

Das Folienelement weist eine Dicke von ≥ 20 µm bis ≤ 1000 µm auf (bestimmt gemäß DIN 53370:2006-11) und bedeckt nur einen Teilbereich in der ersten Werkzeughälfte.

Dass "das Folienelement einen Rand aufweist" bedeutet vorliegend bevorzugt einen um das gesamte Folienelement laufenden Rand, d.h. einen vollständig umlaufenden Rand, wobei "vollständig umlaufend" sich auf Draufsicht auf die Vorderseite des Spritzgusselementes mit eingelegtem Folienelement bezieht. Sofern das Folienelement direkt an den Rand der Hinterspritzschicht anliegt, also z.B. bei einem viereckigen Folienelement nur zwei oder drei der Seiten "in" der Hinterspritzschicht liegen, bilden bevorzugt nur diese Seiten und der dort liegende Randteil den inneren bzw. den äußeren Randbereich.

Dass "das Folienelement einen inneren Randbereich definiert" bedeutet wiederum bevorzugt, dass durch den Rand des Folienelements besagter innerer Randbereich festgelegt wird, und zwar so, wie es sich aus der zuvor genannten Breitebeschränkung ergibt. "Die vorbestimmte Strecke d1" gibt hierbei also die Breite dieses inneren Randbereichstreifens an, der im Bereich der Folienfläche liegt.

Dass "die vorbestimmte Strecke d1 rechtwinklig zu dem Rand in Richtung des Folienelements verläuft" bedeutet vorliegend bevorzugt nichts anderes, als dass die innere Grenze des inneren Randbereiches parallel in der Folienebene zum Rand des Folienelementes verläuft. So kann bei einer Ausführungsform gleichzeitig die Grenze des inneren Aufheizbereiches definiert werden als auch die Strecke, welche zur Bestimmung der Breite des inneren Aufheizbereiches zu berücksichtigen ist.

Wenigstens während eines Teils des Einspritzens des plastifizierten thermoplastischen Kunststoffmaterials wird der innere Randbereich des Folienelements durch ein oder mehrere in der ersten Werkzeughälfte vorliegende Temperierelemente mindestens auf eine Temperatur T von 20 °C unterhalb der Vicat-Erweichungstemperatur (bestimmt nach DIN ISO 306:2014 Methode B bei 120 K/h Aufheizzeit) des Materials des Folienelements erwärmt. Es werden vorbestimmte Abschnitte der der Kavität zugewandten ersten Werkzeughälfte erwärmt und weitere vorbestimmte Abschnitte der der Kavität zugewandten ersten Werkzeughälfte nicht erwärmt; das Aufheizen des Werkzeugs erfolgt somit örtlich begrenzt. Ein Erwärmen "während eines Teils des Einspritzens" bedeutet, dass zumindest temporär während des Einspritzvorgangs, bevorzugt während des gesamten Einspritzvorgangs, ein Erwärmen erfolgt.

Vorzugsweise beträgt die Temperatur T mindestens 15 °C unterhalb der Vicat-Erweichungstemperatur, mehr bevorzugt mindestens 5 °C unterhalb der Vicat-Erweichungstemperatur. Noch weiter bevorzugt ist, wenn die Temperatur T größer oder gleich der Vicat-Erweichungstemperatur des Materials des Folienelements ist. Besonders bevorzugt ist die Temperatur bis zu 40°C (einschließlich) größer als die Vicat-Erweichungstemperatur. Noch höhere Temperaturen sind aus energetischen Gründen und aufgrund der längeren Zykluszeiten weniger favorisiert. Bei einem Multilagenfolienelement beziehen sich diese Angaben auf die Vicat-Temperatur des Materials der Trägerschicht.

Für die Zwecke der vorliegenden Erfindung kann die Temperatur T als die Temperatur an den betreffenden Regionen der Wand der ersten Werkzeughälfte angesehen werden. Auf diese Weise kann die Temperatursteuerung eines Spritzgusswerkzeuges zum dynamischen Temperieren verwendet werden. Das Aufheizen kann beispielsweise durch Induktionsheizung, Keramikheizung, Wasser(dampf)heizung oder elektrische Beheizung erfolgen. Bevorzugt wird nach dem Aufheizvorgang die erste Werkzeughälfte wieder gekühlt, beispielsweise auf 120 °C oder weniger oder 80 °C oder weniger.

Im erfindungsgemäßen Verfahren erfolgt eine örtlich begrenzte Aufheizung des Werkzeugs mittels der sogenannten dynamischen Temperierung am Übergang Folienelement/Hinterspritzmaterial, d.h. im Randbereich der Folie, wo die Fließfront des Hinterspritzmaterials auf das Folienelement trifft. Während eines Spritzgusszyklusses erfolgt allgemein ein rasches Aufheizen der Werkzeugwand an der betreffenden Stelle auf die Zieltemperatur und dann wieder ein rasches Abkühlen. Bisher wurde die dynamische Temperierung nicht zu diesem Zweck eingesetzt. Dynamische Temperierung, das zügige Aufheizen der Werkzeugwand vor dem Einspritzen der Schmelze und nach dem Einspritzvorgang wieder möglichst zügige Herabkühlen der Temperatur der Werkzeugwand, wurde bisher nur eingesetzt, um bei zwei Schmelzen das frühzeitige Erstarren zu verhindern, um so eine gute Verbindung und Oberfläche zu erhalten und folglich die Abformgenauigkeit der Werkzeugoberfläche zu erhöhen, um mikrostrukturierte Oberflächen zu füllen oder um mit gefüllten Thermoplasten Hochglanzoberflächen zu erzielen.

Es war überraschend, dass sich vorliegend ein Effekt ergibt, obwohl nicht der erkennbare Übergang zwischen zwei Fließfronten, also eine Bindenaht, vermieden wird, sondern dass auf diese Weise Übergänge zwischen einem als Festkörper in das Werkzeug eingebrachten Element und einer Thermoplastschmelze, welche zum Hinterspritzen dient, vermieden werden können. Die Verbindung zwischen dem Folienelement und dem Hinterspritzmaterial im Spritzgusselement ist optisch einwandfrei, ohne Lufteinschlüsse, ohne signifikantes Verziehen, ohne Über- oder Unterfließen der Folie; es gibt keine Inhomogenität im Übergangsbereich zwischen Folie und Hinterspritzmaterial.

Auf diese Weise werden Spritzgusselemente mit auf der Vorderseite des Spritzgusselements integriertem Folienelement erhalten, bei denen sich der Folienrand, obwohl mitten in der Fläche des Spritzgusselementes liegend, nicht erkennen lässt. Die Oberfläche auch auf der Seite des Spritzgusselementes, in welche das Folienelement integriert ist, ist glatt, ohne Kerbenbildung, also fugenlos, mithin "bündig", und lässt sich daher sehr gut beschichten, insbesondere lackieren. Es ist nicht mehr erforderlich, die ganze betreffende Bauteilseite mit einer Folie zu bedecken, um erkennbare Folienränder im Spritzgussteil zu vermeiden. Das Verfahren ist aufgrund des geringeren erforderlichen Energieaufwandes und der geringeren benötigten Folienfläche vergleichsweise kostengünstig.

Im Verfahren ist die "Vorderseite des Spritzgusselementes" vorzugsweise die Sichtseite des Bauteils, das heißt diejenige Seite, welche in der Endanwendung des Bauteils, welches in ein Gehäuse eingebaut sein kann oder beispielsweise in einem Fahrzeug integriert ist, zu sehen ist.

Das Folienelement bedeckt nur einen Teilbereich in der ersten Werkzeughälfte. Dann handelt es sich nicht um eine vollflächig die Hinterspritzschicht überdeckende Folie. Das Folienelement kann im Randbereich des Spritzgusselements, z.B. direkt an den Rand des Spritzgusselements angrenzend, platziert sein, aber auch mitten auf der Substratschicht liegen. Die Positionierung des Folienelements ist grundsätzlich nicht beschränkt.

Das Folienelement kann über verschiedene bekannte Möglichkeiten in der Werkzeugkavität fixiert werden. Gängige Technologien sind dabei unter anderem elektrostatische Aufladung, Vakuum und manuelle Haltelaschen.

Die Breite des Folienelements entspricht, gemäß der üblichen Definition, bei rechteckigen Folienelementen der Abmessung der kürzeren Seite des Rechtecks. Bei nicht-rechteckigen Folienelementen werden diese in ein minimal umgebendes Rechteck ("bounding box"). eingehüllt und es wird die Breite dieses Rechtecks als Bezugsgröße verwendet.

Es versteht sich, dass auch mehr als ein Folienelement in das Spritzgusselement integriert sein kann, wobei für jedes Folienelement bevorzugt im Herstellprozess des Spritzgusselementes ein örtliches begrenztes Aufheizen des Werkzeugs im Bereich des Folienrandes erfolgt, um sichtbare Übergänge bzw. sogar Kerben oder spätere Störstellen in einer Lackierung zu vermeiden.

In Bezug auf das Folienelement bedeutet die erfindungsgemäß vorgesehene Dicke bevorzugt, dass das Folienelement diese Dicke über die gesamte Fläche aufweist. Es versteht sich, dass minimale Fertigungstoleranzen dieselbe Dicke bedeuten. Vorder- (also Sichtseite) und Rückseite der Folie liegen somit im Wesentlichen planparallel, bevorzugt planparallel, zueinander.

Das Folienelement kann aus einer einlagigen Folie aus einer entsprechenden thermoplastischen Zusammensetzung, enthaltend ein oder mehrere thermoplastische Polymere und gegebenenfalls weitere Additive, gebildet sein.

Das Folienelement kann alternativ auch aus einer Multilagenfolie gebildet sein, wobei mindestens eine Lage aus einer thermoplastischen Zusammensetzung, enthaltend ein oder mehrere der genannten thermoplastischen Polymere und gegebenenfalls weitere Additive, aufgebaut ist. Die eine oder mehreren weiteren Schichten bei dem Multilagenaufbau können beispielsweise über Coextrusion, Lamination und/oder Beschichtungsverfahren, wie Nassbeschichtungsverfahren oder Plasmabeschichtungsverfahren, aufgebracht sein.

Als Folienmaterial sind auch aus thermoplastischen Kunststoffen ableitbare Co-Extrusions-Folienaufbauten und Composite geeignet.

Das Folienelement kann glatt sein oder eine Oberflächenstruktur aufweisen, die einseitig oder beidseitig auf der Folie aufgebracht ist.

Die Größe des Folienelements beträgt bevorzugt 100 mm² bis 2250000 mm², weiter bevorzugt 500 mm² bis 1000000 mm² und besonders bevorzugt 1000 mm² bis 500000 mm².

Das Folienelement, insbesondere bei Vorliegen einer Bedruckung des Folienelements, ist bevorzugt größer, als die jeweilige gewünschte Funktion es erfordert, um Foliendehnungen bzw. Folienverschiebungen aufgrund der Wärmeerweichung der Folie abzufangen.

Der Anteil der Foliensichtfläche, d.h. der zur Außenseite des Spritzgusselementes zeigende Folienteil, an der gesamtem Fläche des Spritzgusselementes auf der Seite, die dazu bestimmt ist, die Sichtseite des Bauteils zu sein, beträgt bevorzugt 0,5 bis 90%, noch weiter bevorzugt 1 bis 80%, besonders bevorzugt 2 bis 70%, ganz besonders bevorzugt 3 bis 60%, äußerst bevorzugt 5 bis 60 %.

Das Hinterspritzmaterial kann transparent, transluzent oder opak sein. Grundsätzlich sind die gleichen thermoplastischen Polymere, alleine oder in Mischung, und deren Zusammensetzungen, enthaltend übliche Additive, wie beim Folienmaterial auch für die Hinterspritzkomponente geeignet. Bevorzugt ist das Material der Hinterspritzschicht transparent. Unter "transparent" werden im Sinne der vorliegenden Erfindung Materialien verstanden, die eine Lichttransmission im VIS-Bereich des Spektrums (380 bis 780 nm) von mehr als 3 % (Transmissionsgrad TVIS), bestimmt nach DIN ISO 13468-2:2006 (D65, 10°, Schichtdicke der Musterplatte: 4 mm), und bevorzugt eine Trübung von weniger als 10 %, bestimmt nach ASTM D1003:2013, aufweisen, bezogen auf die jeweilige Substratschicht an allen Stellen ihrer Ausdehnung. Insbesondere sind hiermit Materialien gemeint, die eine visuelle Transparenz zeigen, d.h. den Hintergrund abbilden.

Die gemittelte Schichtwandstärke der Hinterspritzkomponente im Überlappungsbereich mit der Folie beträgt bevorzugt 0,5 mm bis 10 mm, weiter bevorzugt 1 mm bis 8 mm, besonders bevorzugt 1,5 bis 6 mm. "Gemittelt", da die Hinterspritzschicht, erfindungsgemäß verstanden als die Schicht aus dem Hinterspritzmaterial, also die Schicht, die durch direktes Hinterspritzen der Folie entsteht, nicht über die gesamte Fläche der Folie dieselbe Dicke aufweisen muss, sondern auch unterschiedliche Dicken aufweisen kann, beispielsweise durch Ausbildung von Verstärkungsrippen, aufgrund der Bauteilform, aufgrund von Befestigungsstrukturen etc. Bevorzugt ist die Schichtwandstärke der Hinterspritzkomponente im Überlappungsbereich mit der Folie an jeder Stelle des Überlappungsbereiches aber gleich, so dass die gemittelte Schichtwandstärke der tatsächlichen Schichtwandstärke der Hinterspritzkomponente an allen Stellen des Überlappungsbereiches entspricht.

Das erfindungsgemäße Verfahren eignet sich für eine Vielzahl von Anwendungen, bei denen funktionale Folien in Teilbereiche der Vorderseite von Spritzgussteilen integriert sind. Entsprechende Spritzgusselemente, die aufgrund ihres überlegenen fugenlosen, optisch hochwertigen Erscheinungsbildes ebenso Gegenstand der vorliegenden Erfindung sind, sind beispielsweise Verscheibungselemente mit integrierten Heizfolien, Frontpanele wie Kühlergrills, aber auch geschlossene Frontpanele, wie sie bei Elektrofahrzeugen eingesetzt werden, aber auch Heck-, Seiten- oder Dachpanele von Fahrzeugen, insbesondere Automobilen, für Sensor-Technologie-Anwendungen. Die genannten Elemente für z.B. LiDAR- und/oder Kamera-Anwendungen sind ebenfalls im (Sensor-)Sichtbereich und also nur in einem Teilbereich mit einer Heizfolie ausgestattet, um die Funktionsfähigkeit der Sensoren auch bei witterungsbedingter Eisbildung sicherzustellen.

Als Material für das Folienelement und für die Hinterspritzschicht sind unabhängig voneinander beispielsweise ABS, AMMA, ASA, CA, CAB, COC, EP, UF, CF, MF, MPF, PF, PAN, PA, PE, HDPE, LDPE, LLDPE, PEI, PC, PET, PMMA, PP, PS, SB, PUR, PVC, RF, SAN, PBT, PPE, POM, PP-EPDM, UP, TPU (Kurzbezeichnungen nach DIN EN ISO 1043-1:2002-06) sowie ihre Mischungen und ihre Zusammensetzungen, enthaltend übliche Additive, geeignet. Die Materialien für Folienelement und Hinterspritzschicht können gleich sein, aus der gleichen Stoffklasse gewählt sein (zum Beispiel zwei Polycarbonate) oder aus verschiedenen Stoffklassen gewählt sein. Für das Folienelement eignen sich weiterhin Verbundfolien aufgebaut aus zwei oder mehr Schichten der vorgenannten Kunststoffe.

Als Material für das Folienelement und für die Hinterspritzschicht bevorzugt sind thermoplastische Polyurethane, Polymethylmethacrylat (PMMA) sowie modifizierte Varianten von PMMA, Cycloolefin-Copolymere, aromatisches Polycarbonat (PC), auch umfassend Copolycarbonat (Co-PC), Polyetherimid, Styrol-Acrylnitril, Acrylnitril-Styrol-Acrylester-Copolymerisate (ASA), Acrylnitril-Butadien-Styrol-Copolymerisate (ABS), Polyester - insbesondere /aromatisches Polycarbonat-Blends oder ABS/aromatisches Polycarbonat-Blends oder deren Zusammensetzungen. Besonders bevorzugt sind aromatisches Polycarbonat, einschließlich Copolycarbonat, Polymethylmethacrylat, Styrol-Acrylnitril, Cycloolefin-Copolymere, Polyetherimid oder deren Zusammensetzungen, ganz besonders bevorzugt aromatisches Polycarbonat, ABS/Polycarbonat und/oder Polybutylenterephthalat/Polycarbonat-Blends oder deren Zusammensetzungen.

Das Verfahren ist insbesondere für die Kombination einer Folie auf Basis von aromatischem Polycarbonat mit Hinterspritzmaterial auf Basis von aromatischem Polycarbonat geeignet, ebenso für die Kombination einer Folie auf Basis von Polymethylmethacrylat mit Material zum Hinterspritzen auf Basis von Polymethylmethacrylat. "Auf Basis von" bedeutet hierbei einen Anteil des Polymers an der Gesamtzusammensetzung des jeweiligen Materials von mindestens 50 Gew.-%, bevorzugt mindestens 55 Gew.-%, weiter bevorzugt mindestens 60 Gew.-%.

In einer Ausführungsform des Verfahrens umfassen daher das thermoplastische Kunststoffmaterial und/oder das Material des Folienelements ein Polycarbonat. Vorzugsweise handelt es sich bei dem Polycarbonat des thermoplastischen Kunststoffmaterials und des Folienelements um ein aromatisches Polycarbonat.

Unter aromatischem "Polycarbonat" werden erfindungsgemäß sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Ein Teil, bis zu 80 Mol-%, vorzugsweise von 20 Mol-% bis zu 50 Mol-%, der CarbonatGruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Die thermoplastischen Polycarbonate, einschließlich der thermoplastischen, aromatischen Polyestercarbonate, haben mittlere Molekulargewichte Mw, bestimmt mittels Gelpermeationschromotographie nach DIN 55672-1:2007-08, kalibriert gegen Bisphenol A-Polycarbonat-Standards unter Verwendung von Dichlormethan als Elutionsmittel, von 10.000 g/mol bis 35.000 g/mol, vorzugsweise von 12.000 g/mol bis 32.000 g/mol, weiter bevorzugt von 15.000 g/ mol bis 32.000 g/mol, insbesondere von 20.000 g/mol bis 31.500 g/mol, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien, 1992, Seiten 117-299 verwiesen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, US 5,340,905 A, US 5,097,002 A, US-A 5,717,057 A).

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten. Ebenso ist eine Herstellung über ein Schmelzepolymerisationsverfahren durch Umsetzung von Dihydroxyarylverbindungen mit beispielsweise Diphenylcarbonat möglich.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 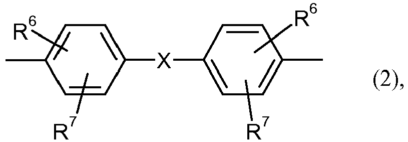 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und

- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C2- bis C₅-Alkyliden, C₅- bis C₆-Cycloalkyliden, -O-, -SO-, -CO-, -S-, -SO₂-
oder für einen Rest der Formel (2a)

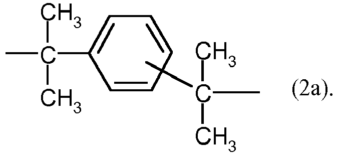

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 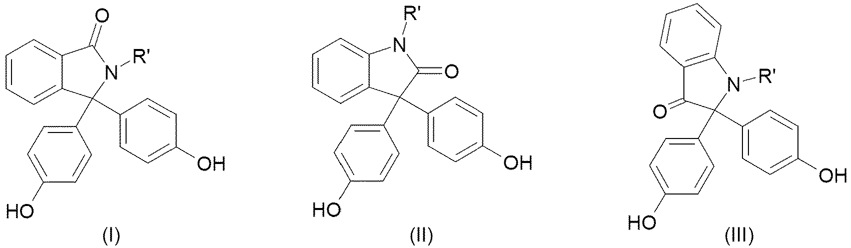 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Dihydroxyarylverbindungen sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A sowie die Diphenole der Formeln (I), (II) und (III).

Diese und weitere geeignete Dihydroxyarylverbindungen sind z.B. in US-A 3 028 635, US- A 2 999 825, US-A 3 148 172, US-A 2 991 273, US-A 3 271 367, US-A 4 982 014 und US- A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur eine Dihydroxyarylverbindung eingesetzt, im Fall der Copolycarbonate werden mehrere Dihydroxyarylverbindungen eingesetzt. Die verwendeten Dihydroxyarylverbindungen, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan, sowie von den Diphenolen der Formeln (I), (II) und/oder (III) 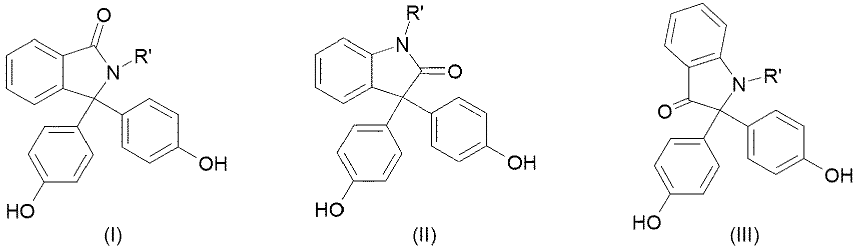 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A.

Das Polycarbonat weist bevorzugt eine MVR von 5 bis 20 cm³/(10 min), weiter bevorzugt von 5,5 bis 12 cm³/(10 min), noch weiter bevorzugt bis 8 cm³/(10 min), bestimmt nach ISO 1133:2012-03 bei einer Prüftemperatur von 300 °C und 1,2 kg Belastung, auf.

Es versteht sich, dass das Folienmaterial neben dem thermoplastischen Polymer Additive und/oder Prozesshilfsmittel zur Folienherstellung enthalten kann ("seine Zusammensetzung"), wie zum Beispiel Stabilisatoren, Lichtschutzmittel, Weichmacher, Füllstoffe wie Fasern und Farbstoffe. Das Gleiche gilt für das Material der Hinterspritzschicht.

Nicht zu dem inneren Randbereich gehörende Bereiche des Folienelements werden nicht auf die Temperatur T erwärmt. Auf diese Weise kann im Verfahren Energie eingespart werden.

Insbesondere bei kleinen Folienelementen ist es in einer weiteren Ausführungsform bevorzugt, wenn sich aus energetischen Gründen das örtlich begrenzte Aufheizen nur auf solche Bereiche erstreckt, in denen der Übergang Fließfront des Hinterspritzmaterials/Folienelement und ggf. das Folienelement liegt.

In einer weiteren Ausführungsform des Verfahrens liegt die Temperatur T höchstens 80 °C über der Vicat-Erweichungstemperatur (bestimmt nach DIN ISO 306:2014 Methode B bei 120 K/h Aufheizzeit) des Materials des Folienelements.

In einer weiteren Ausführungsform des Verfahrens beträgt die vorbestimmte Strecke dl ≥ 1% bis ≤ 40% der Breite des Folienelements. Vorzugsweise beträgt d1 ≥ 2% bis ≤ 30% der Breite des Folienelements, mehr bevorzugt ≥ 3% bis ≤ 10% der Breite des Folienelements. In einer weiteren Ausführungsform des Verfahrens definiert das Folienelement weiterhin einen äußeren Randbereich, welcher sich von dem Rand bis zu einer vorbestimmten Strecke d2, welche rechtwinklig zu dem Rand in Richtung von dem Folienelement entfernt verläuft, erstreckt, wobei d2 ≥ 1% bis ≤ 40% der Breite des Folienelements beträgt und wobei in der ersten Werkzeughälfte zu dem äußeren Randbereich korrespondierende Abschnitte zusammen mit dem inneren Randbereich auf die Temperatur T erwärmt werden. Vorzugsweise beträgt d2 ≥ 2% bis ≤ 30% der Breite des Folienelements, mehr bevorzugt ≥ 3% bis ≤ 10% der Breite des Folienelements

Das eingesetzte Folienelement kann unbeschichtet, ein- oder beidseitig, einfach oder mehrfach funktionalisiert sein. Die Funktionalisierung kann durch
- Beschichten, zum Beispiel Nassbeschichtung (beispielsweise roll to roll-Verfahren) oder Plasmaverfahren,
- Bedrucken, zum Beispiel: Siebdruck, Inkjet, Tampondruck, Tiefdruck oder Offset,
- Laminieren (ein- und mehrlagig),
- Prägen,
- Coextrusion (ein- und mehrlagig),
- Einfärben,
- Additivierung (beispielsweise Streulichtpigmente, Diffusorzusätze, IR-Absorber, UV-Absorber oder Antistatika)
und durch Kombination verschiedener Funktionalisierungsverfahren erfolgen.

Beispiele für Funktionalisierung, aber nicht einschränkend, können sein:
A) Schutz der Oberfläche (beispielsweise Kratzschutz, Witterungsstabilität oder Chemikalienbeständigkeit)
B) Aufbringen von Dekoren (beispielsweise Farben, Strukturen, Markierungen oder Beschriftungen)
C) Aufbringen von Funktionalitäten (beispielsweise Anti-Reflex, Easy to clean, hydrophob, Temperierelemente, Reflexschichten oder Kontaktierungen)
D) Haftvermittelnde Schichten.

Eine Kombination von mehreren Funktionalisierungen ist möglich.

In dem bzw. den eingesetzten Folienelement(en) können unterschiedlichste Funktionen vorkommen; bei mehreren Folienelementen pro Spritzgusselement auch verschiedene Funktionen. Auch ein Folienelement kann gleichzeitig mehrere Funktionen aufweisen. Mögliche Funktionen der Folie sind die Erzeugung lokaler Projektionsflächen, die Erzeugung lokaler Streuflächen, das Einbringen farbiger Bereiche, das Einbringen von Oberflächenstrukturen, eine Funktionsadditivierung, z.B. eine lokal schaltbare Transparenz oder Farbe, das Einbringen einer Anti-Fingerprint-Funktion, eine Antireflex-Funktion, eine Antiglare-Funktion, eine Antibeschlagsfunktion, das Einbringen definierter haptischer Eigenschaften, die lokale Erhöhung der chemischen Beständigkeit der Oberfläche, das Einbringen einer Barrierefunktion, das Einbringen von IR-Reflektivität, das Einbringen von IR-Absorptionseigenschaften; weiterhin kann die Folie Funktionen über Oberflächenmetallisierungen und/oder über Plasma aufgebrachte Schichten (beispielsweise Dekorschichten, z.B. Chrom, Aluminium; leitfähige Beschichtungen; IR-Reflektion; Heizungen) aufweisen, eine Polarisationsfolie sein, etwa für Display-Cover, oder eine Super Retardation Folie, welche Regenbogenfarben durch Polarisation bei Displays eliminiert, und andere über Additive, Polymereigenschaften oder Oberflächeneigenschaften bzw. -beschaffenheit in eine Folie einbringbare Funktionen.

Daher ist in einer weiteren Ausführungsform des Verfahrens das Folienelement eine Heizfolie, eine Folie mit Projektionsfunktion, eine Folie mit Streufunktion, eine farbige Folie, eine Folie mit optisch erkennbarer Oberflächenstruktur, eine Folie mit Funktionsadditivierung, eine Folie mit Antireflexfunktion, eine Folie mit Anti-Fingerprint-Funktion, eine Folie mit Antiglarefunktion, eine Folie mit Antibeschlagfunktion, eine Folie mit gegenüber dem Hinterspritzmaterial erhöhter chemischen Beständigkeit, eine Folie mit Barrierefunktion, eine IR-reflektive Folie, eine Folie mit IR-Absorptionseigenschaften, eine Polarisationsfolie, eine metallisierte Folie und/oder eine Super Retardation-Folie.

In einer weiteren Ausführungsform des Verfahrens weist das Folienelement eine Dicke von ≥ 100 µm bis ≤ 700 µm auf. Weiter bevorzugt sind Dicken von ≥ 150 µm bis ≤ 500 µm, noch weiter bevorzugt von ≥ 175 µm bis ≤ 375 µm.

In einer weiteren Ausführungsform des Verfahrens wird an dem entnommenen Spritzgusselement anschließend wenigstens die Bauteilseite, auf der sich das Folienelement befindet, mit einem Beschichtungsmittel beschichtet. Selbstverständlich können auch mehrere Schichten von unterschiedlichen Beschichtungsmitteln aufgetragen werden.

Eine Beschichtung soll üblicherweise einen mechanischen Schutz gegen Abrieb und Verkratzung und/oder einen Schutz gegen Bewitterungseinflüsse, d.h. Beregnung, Temperatur und UV-Strahlung, bieten.

Beschichtungssysteme für beispielsweise Spritzgusselemente auf Basis von aromatischem Polycarbonat, insbesondere in Kombination mit einem Folienelement auf Basis von aromatischem Polycarbonat, lassen sich grob in drei Kategorien einteilen:
(a) Thermisch härtende Beschichtungssysteme auf Basis eines Polysiloxanlackes, die sowohl einschichtig als auch mehrschichtig (mit einer lediglich haftvermittelnden Primerschicht zwischen Substrat und Polysiloxandecklack) sein können. Diese sind u. a. in US 4,278,804 A, US 4,373,061 A,US 4,410,594 A, US 5,041,313 A und EP 1 087 001 A2 beschrieben. Beispielhaft sind hier die kommerziell erhältlichen Systeme der Momentive Performance Materials Inc. Wilton, CT USA wie PHC 587; PHC 587B, PHC 587C;PHC 587 C2 SHP 401 (Primer) / AS 4000 (Topcoat) oder auch SHP 401 (Primer) / AS 4002 (Topcoat) erwähnt sowie - KASI Flex^{®} oder Sun Flex^{®}, beide von KRD Coatings, Geesthacht, Deutschland, oder Silvue^{®} MP 100, SDC Coatings, Deutschland, oder Sicralan^{®} MRL von GFO, Schwäbisch Gmünd, Deutschland.
   Zusätzlich kann hier eine haftvermittelnde Primerschicht vorliegen, welche ein haftvermittelndes Polymer und mindestens einen oder mehrere UV-Absorbern umfasst, die aber aufgrund des vollständigen Fehlens von UV-Absorbern oder aufgrund einer geringen Konzentration an UV-Absorber in Kombination mit der zu geringen Schichtdicke keine Bewitterungsstabilität bewirken kann. Weiter könnten optional weitere Komponenten in der haftvermittelnden Primerschicht enthalten sein. Die Schichtdicke einer solchen Primerschicht liegt im Bereich von etwa 0,3 - 1,5 µm.
(b) Derartige Beschichtungssysteme sind jedoch für einige Anwendungsfälle noch nicht in ausreichendem Maße witterungsstabil. Um eine höhere Lebensdauer der Bauteile zu erreichen, wurden hier verbesserte Systeme entwickelt. Eine erfolgreiche Variante ist die Verwendung des für den siloxanbasierten Decklack notwendigen Haftprimers als UV-Schutzprimer, indem dieser mit UV-Absorber versetzt und in einer höheren Schichtdicke appliziert wird:
   Thermisch härtende Mehrschichtsysteme mit einer UV-Schutzprimerschicht und einer Decklackschicht auf Basis eines Polysiloxanlackes. Geeignete Systeme sind z.B. aus US 5,391,795 A und US 5,679,820 A und "Paint & Coating Industrie; July 2001 Seite 64 bis 76: The Next Generation in Weatherable Hardcoats for Polycarbonate" by George Medford / General Electric Silicones, LLC, Waterford, NY; James Pickett / The General Electric Co., Corporate Research and Development, Schenectady, NY; and Curt Reynolds / Lexamar Corp., Boyne City, MI bekannt. Ein kommerziell erhältliches System ist das darin erwähnte SHP470 (UV-Schutzprimer)/AS4700 (Decklack)-System der Momentive Performance Materials. Dieser SHP470-Primer ist ein haftvermittelnder UV-Schutzprimer auf Basis von Polymethymethacrylat unter anderem mit 1-Methoxy-2-propanol und Diacetonalkohol als Lösemittel und Dibenzoylresorcin als UV-Absorber. Der AS4700-Decklack ist ein Polysiloxandecklack mit silyliertem UV-Absorber. Weiterhin sind geeignete Systeme solche, die in der WO 2009/049904 beschrieben sind, enthaltend
   a) 100.000 Gewichtsteile einer Primerzusammensetzung, geeignet als Haftvermittler zwischen einem thermoplastischen Substrat und einem siloxanbasierten Decklack, enthaltend Bindermaterial (a1), Lösemittel (a2), und UV-Absorber (a3);
   b) 0 bis 900.000 Gewichtsteile eines Lösemittels, und
   c) 1 bis 3.000 Gewichtsteile einer Verbindung der Formel (3): 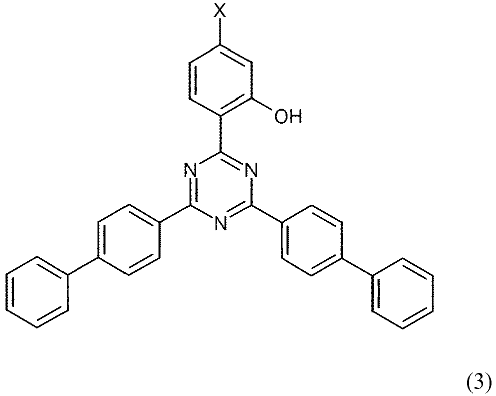
      wobei X = OR6, OCH₂CH₂OR6, OCH₂CH(OH)CH₂OR6 oder OCH(R7)COOR8, worin
      R6 = verzweigtes oder unverzweigtes C₁- bis C₁₃-Alkyl, C₂- bis C₂₀-Alkenyl, C₆- bis C₁₂-Aryl oder -CO-C₁- bis C₁₈-Alkyl,
      R7 = H oder verzweigtes oder unverzweigtes C₁- bis C₈-Alkyl, und
      R8 = C₁- bis C₁₂-Alkyl; C₂- bis C₁₂-Alkenyl oder C₅- bis C₆-Cycloalkyl sind,
      wobei die Zusammensetzung eine Viskosität von 40sec bis 140sec, gemessen nach DIN EN ISO 2431:2012-03 bei 23°C und einem Auslaufbecher mit einer Düse, die einen Durchmesser von 2 mm aufweist, hat.

Beide Schichten, d.h. Primerschicht und Decklackschicht zusammen, übernehmen hierbei die UV-Schutzausrüstung.
(c) Ebenso können UV-härtende Beschichtungssysteme, z.B. auf Acrylat-, Urethanacrylat oder Acrylsilanbasis, die gegebenenfalls Füllstoffe zur Verbesserung der Kratzfestigkeit beinhalten, aufgrund ihres größeren Applikationsschichtdickenfensters einen ausreichenden Witterungsschutz bilden. Solche Systeme sind bekannt und u.a. beschrieben in US 3,707,397 A oder DE 69 71 7959 T2, US 5,990,188 A, US 5,817,715 A, US 5,712,325 A, und WO 2014/100300 A1. Beispielhaft für eine solche geeignete Beschichtung sind die kommerziell erhältlichen Beschichtungssysteme UVHC 3000, UVHC 3000K, UVHC 3000S und UVHC 5000 und deren Modifikationen, Systeme der Firma Momentive Performance Materials, oder UVT 200, UVT 610 und UVT 820 und deren Modifikationen, Beschichtungssysteme der Firma Redspot.

Die hier erwähnten witterungsstabilen Kratzschutzschichten (a) und die hochwitterungsstabilen Kratzschutzschichten (b) und (c) werden auch auf anderen thermoplastischen Substraten wie z.B. Polycarbonatblends verwendet.

Die Applikation der Primer- und Decklackschichten kann über Fluten oder Sprühen erfolgen. Besonders bevorzugt ist das Flutverfahren ("Fluten") aufgrund der resultierenden hohen optischen Qualität. Das Flutverfahren kann manuell mit Schlauch oder geeignetem Beschichtungskopf oder automatisch im Durchlauf über Flutlackierroboter- und gegebenenfalls über Schlitzdüsen erfolgen. Hierbei können die Bauteile sowohl hängend als auch in einem entsprechenden Warenträger gelagert beschichtet werden. Bei größeren und/oder 3D-Bauteilen wird das zu beschichtende Teil in einen geeigneten Warenträger eingehangen oder aufgesetzt.

Bei Kleinteilen kann die Beschichtung auch per Hand durchgeführt werden. Hierbei wird die zu schichtende flüssige Primer- oder Lacklösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden z.B. senkrecht an einer Klammer hängend nach den jeweiligen Herstellervorgaben abgelüftet und gehärtet.

Die Sprühbeschichtung kann mit üblichen Sprühpistolen per Hand oder Automaten erfolgen.

Ein weiterer Gegenstand der Erfindung ist ein Spritzgusselement das ein Verscheibungselement, eine transparente Abdeckung oder ein Verkleidungselement ist, erhältlich durch ein erfindungsgemäßes Verfahren, mit einer Vorderseite und einer Rückseite, wobei auf der Vorderseite des Spritzgusselementes ein Folienelement bündig zur Oberfläche einer

Hinterspritzschicht angeordnet ist und das Folienelement eine Heizfolie ist, wobei das Folienelement nur einen Teil der Oberfläche der Hinterspritzschicht abdeckt und wobei das Folienelement und die Hinterspritzschicht jeweils ein thermoplastisches Polymer umfassen.

Das Folienelement weist hierbei eine Dicke von ≥ 20 µm bis ≤ 1000 µm (bestimmt gemäß DIN 53370:2006-11), bevorzugt ≥ 100 µm bis ≤ 700 µm, besonders bevorzugt von ≥ 175 µm bis ≤ 375 µm, auf, und das Folienelement und die Hinterspritzschicht sind fugenlos miteinander verbunden oder, für den Fall, dass eine Fuge zwischen Folienelement und Hinterspritzschicht vorliegt, weist diese Fuge eine Tiefe von ≤ 12% (vorzugsweise ≤ 5%, mehr bevorzugt ≤ 3%) der Dicke des Folienelements und/oder eine Breite von ≤ 12% (vorzugsweise ≤ 5%, mehr bevorzugt ≤ 3%) der Dicke des Folienelements auf.

Zur Vermeidung von Wiederholungen wird auf die voranstehenden Ausführungen zu thermoplastischen Polymeren verwiesen, welche ebenfalls auf das erfindungsgemäße Spritzgusselement anwendbar sind.

In einer Ausführungsform des Spritzgusselements umfassen das Folienelement und die Hinterspritzschicht jeweils ein Polycarbonat. Zur Vermeidung von Wiederholungen wird auf die voranstehenden Ausführungen zu Polycarbonaten verwiesen, welche ebenfalls auf das erfindungsgemäße Spritzgusselement anwendbar sind.

In einer weiteren Ausführungsform des Spritzgusselements ist das Folienelement eine Heizfolie, eine Folie mit Projektionsfunktion, eine Folie mit Streufunktion, eine farbige Folie, eine Folie mit optisch erkennbarer Oberflächenstruktur, eine Folie mit Funktionsadditivierung, eine Folie mit Antireflexfunktion, eine Folie mit Anti-Fingerprint-Funktion, eine Folie mit Antiglarefunktion, eine Folie mit Antibeschlagfunktion, eine Folie mit gegenüber dem Hinterspritzmaterial erhöhter chemischen Beständigkeit, eine Folie mit Barrierefunktion, eine IR-reflektive Folie, eine Folie mit IR-Absorptionseigenschaften, eine Polarisationsfolie, eine metallisierte Folie und/oder eine Super Retardation-Folie.

In einer weiteren Ausführungsform des Spritzgusselements weist das Folienelement eine Dicke von ≥ 100 µm bis ≤ 700 µm auf. Bevorzugt sind Dicken von ≥ 150 µm bis ≤ 500 µm, mehr bevorzugt von ≥ 175 µm bis ≤ 375 µm.

In einer weiteren Ausführungsform des Spritzgusselements ist wenigstens die Bauteilseite, auf der sich das Folienelement befindet, mit einem Beschichtungsmittel beschichtet. Zur Vermeidung von Wiederholungen wird auf die voranstehenden Ausführungen zu Beschichtungsmitteln verwiesen, welche ebenfalls auf das erfindungsgemäße Spritzgusselement anwendbar sind.

Das Spritzgusselement ist ein Verscheibungselement, eine transparente Abdeckung oder ein Verkleidungselement und das Folienelement ist eine Heizfolie. Vorzugsweise findet solch ein Spritzgusselement/Folienelement-Bauteil Anwendung in Fahrzeugen.

Die Erfindung betrifft weiterhin die Verwendung eines Formwerkzeug zur Durchführung des erfindungsgemäßen Verfahrens, wobei das Formwerkzeug im geschlossenen Zustand zwischen einer ersten Werkzeughälfte, welche die Vorderseite eines Spritzgusselementes abbildet, und einer zweiten Werkzeughälfte, welche die Rückseite des Spritzgusselementes abbildet, eine komplementär zu dem Spritzgusselement ausgebildete Kavität definiert. Die erste Werkzeughälfte umfasst ein oder mehrere Temperierelemente, welche eingerichtet sind, um vorbestimmte Abschnitte der der Kavität zugewandten ersten Werkzeughälfte zu erwärmen und wobei weitere vorbestimmte Abschnitte der der Kavität zugewandten ersten Werkzeughälfte nicht erwärmt werden.

Die Erfindung wird anhand der nachfolgenden Figuren näher erläutert, ohne jedoch darauf beschränkt zu sein. Es zeigen:
FIG. 1 eine Querschnittsansicht eines erfindungsgemäßen Spritzgusselements
FIG. 2 eine Querschnittsansicht zur Bezeichnung bestimmter Maße in Spritzgusselementen
FIG. 3a und 3b erste Phasen im erfindungsgemäßen Verfahren
FIG. 4a und 4b zweite Phasen im erfindungsgemäßen Verfahren
FIG. 5 eine erste Werkzeughälfte eines Formwerkeuges
FIG. 6 eine Mikroskopaufnahme einer Vergleichsprobe
FIG. 7 eine Mikroskopaufnahme einer erfindungsgemäßen Probe

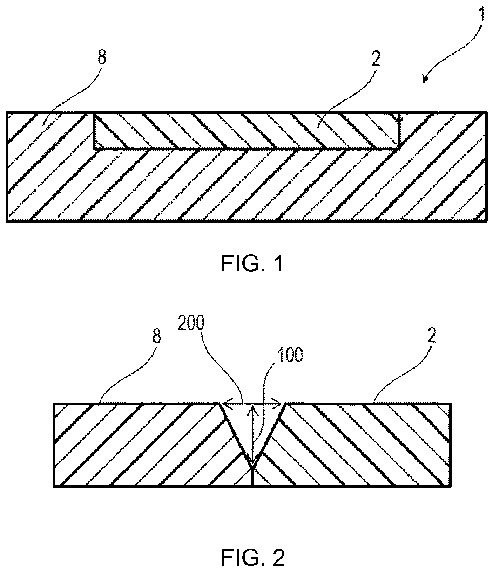

FIG. 1 zeigt schematisch eine Querschnittsansicht eines erfindungsgemäßen Spritzgusselements 1 mit dem Folienelement 2 und der Hinterspritzschicht 8. Die Seite des Spritzgusselements 1, auf der das Folienelement 2 angeordnet ist, stellt hierbei die Vorderseite des Spritzgusselements 1 dar. Entsprechend stellt die Seite, welche dem Folienelement 2 gegenüberliegt, die Rückseite des Spritzgusselements 1 dar.

Das Folienelement 2 ist bündig zu der Oberfläche der Hinterspritzschicht 8 angeordnet, also in diese so eingelassen, dass auf der Vorderseite des Spritzgusselements 1 keine Höhenunterschiede zwischen den die Vorderseite des Spritzgusselements bildenden Oberflächen des Folienelements 2 und der Hinterspritzschicht 8 vorliegen. Das Folienelement ist somit im Zuschnitt kleiner als die Werkzeugüberfläche der Kavität. Mit eingeschlossen ist ein Toleranzbereich von Höhenunterschieden bis ± 1 µm.

Weiterhin ist in FIG. 1 dargestellt, dass das Folienelement 2 nur einen Teil der Oberfläche der Hinterspritzschicht 8 abdeckt. Somit wird ein Teil der Vorderseite des Spritzgusselements 1 auch durch die Hinterspritzschicht 8 gebildet.

Es ist erfindungsgemäß vorgesehen, dass das Folienelement 2 und die Hinterspritzschicht 8 fugenlos miteinander verbunden sind oder dass eine vorhandene Fuge bestimmte Abmessungen nicht überschreitet. Als Fuge wird hierbei ein Spalt an den einander berührenden Kanten von Folienelement 2 und Hinterspritzschicht 8 bezeichnet.

FIG. 2 erläutert schematisch die Abmessungen zur Beschreibung von Fugengeometrien. Dargestellt ist ein vergrößerter Ausschnitt der Vorderseite des Spritzgusselements, an dem das Folienelement 2 und die Hinterspritzschicht 8 aufeinander treffen. Die Fugentiefe 100 entspricht hierbei der senkrechten Abmessung von der tiefsten Stelle der Fuge bis zu einer gedachten Verlängerung der Oberflächen von Folienelement 2 und Hinterspritzschicht 8. Sollten die Oberflächen außerhalb des Fugenbereichs nicht plan zueinander stehen, wird als Bezugsebene eine gemittelte Oberfläche ausgewählt. Die Fugenbreite 200 wird rechtwinklig zur Grenzfläche zwischen Folienelement 2 und Hinterspritzschicht 8 gemessen.

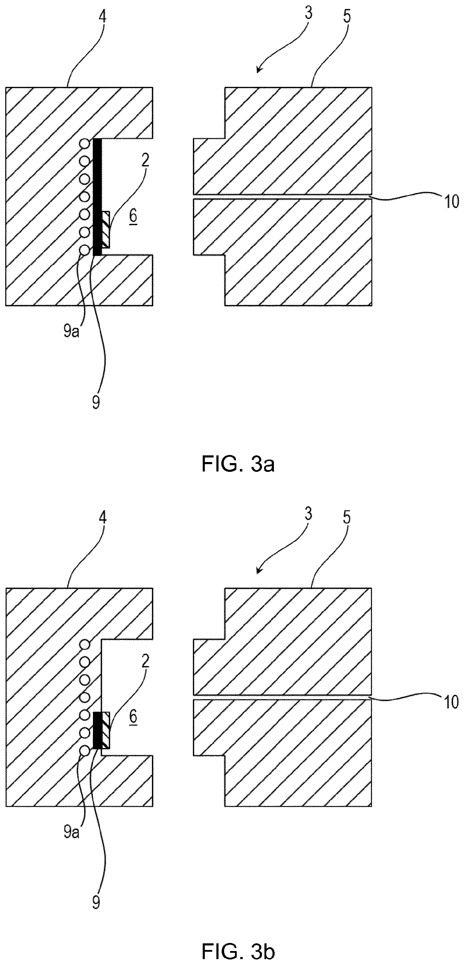

FIG. 3a und 3b zeigen schematisch erste Phasen im erfindungsgemäßen Verfahren. Es wurde ein Formwerkzeug 3 bereitgestellt, welches eine erste Werkzeughälfte 4 und eine zweite Werkzeughälfte 5 aufweist. Die erste Werkzeughälfte 4 bestimmt die Form der Vorderseite und die zweite Werkzeughälfte 5 die Form der Rückseite des herzustellenden Spritzgusselements. Wie anhand der Dimensionen der Vertiefung in der ersten Werkzeughälfte 4 und des Vorsprungs in der zweiten Werkzeughälfte 5 zu erkennen ist, wird bei geschlossenem Formwerkzeug 3 eine Kavität 6 definiert. In diese Kavität 6 kann über den Einspritzkanal 10 ein thermoplastisches Polymer eingetragen werden.

Weiterhin wurde in die erste Werkzeughälfte 4 das Folienelement 2, welches zur Hinterspritzung vorgesehen ist, eingelegt. In die erste Werkzeughälfte 4 ist ein Temperierelement 9 integriert, welches zur Aufheizung und Abkühlung der gesamten Hinterwand der Werkzeughälfte (FIG. 3a) beziehungsweise eines vorbestimmten Randbereichs des Folienelements 4 (FIG. 3b) eingerichtet ist. Das Temperierelement 9 kann in Form von Kanälen ausgeführt sein. Unterhalb der Werkzeugoberfläche kann eine Mehrzahl von Bohrungen verlaufen, durch die ein Fluid gefördert wird, welches dafür sorgt, dass die Werkzeugoberfläche auf einer vorbestimmten, möglichst konstanten, Temperatur gehalten wird.

Ein Temperierelement 9 für die dynamische Temperierung eines ausgewählten Folienbereichs kann optional ebenfalls Kanäle aufweisen, durch die ein heißeres/kälteres Medium in einem separaten Kreislauf gefördert wird. Alternativ kann aber auch mit Temperierelementen in Form von elektrischen Widerstandsheizungen oder induktiv die Oberfläche lokal aufgeheizt werden und über oberflächennahe Kühlbohrungen 9a, durch die kaltes Wasser gefördert wird, wieder abgekühlt werden.

Vorzugsweise befindet sich dieses Temperierelement 9 unterhalb der Oberfläche der ersten Werkzeughälfte 4, um ein besseres Erscheinungsbild des Spritzgusselements zu erreichen. Der Wärmetransport von Temperierelement 9 zu Folienelement 2 erfolgt dann durch das dazwischenliegende Material der ersten Werkzeughälfte. Zur Energieeinsparung und zur Erhöhung der Präzision des Aufheizens wird das dazwischenliegende Material so dünn wie möglich gewählt, beispielsweise mit einer Dicke von ≤ 15 mm und vorzugsweise ≤ 10 mm.

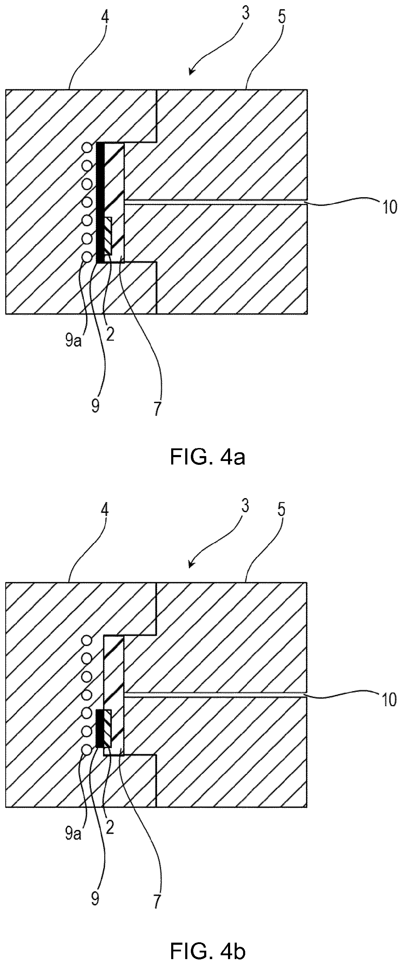

FIG. 4a und 4b zeigen schematisch eine zweite Phase im erfindungsgemäßen Verfahren ausgehend von den Konfigurationen aus FIG. 3a und FIG. 3b. Das Formwerkzeug 3 ist geschlossen und plastifiziertes thermoplastisches Kunststoffmaterial 7 wurde über Kanal 10 in die zwischen erster Werkzeughälfte 4 und zweiter Werkzeughälfte 5 definierte Kavität eingespritzt, so dass eine Hinterspritzschicht ausgebildet wird.

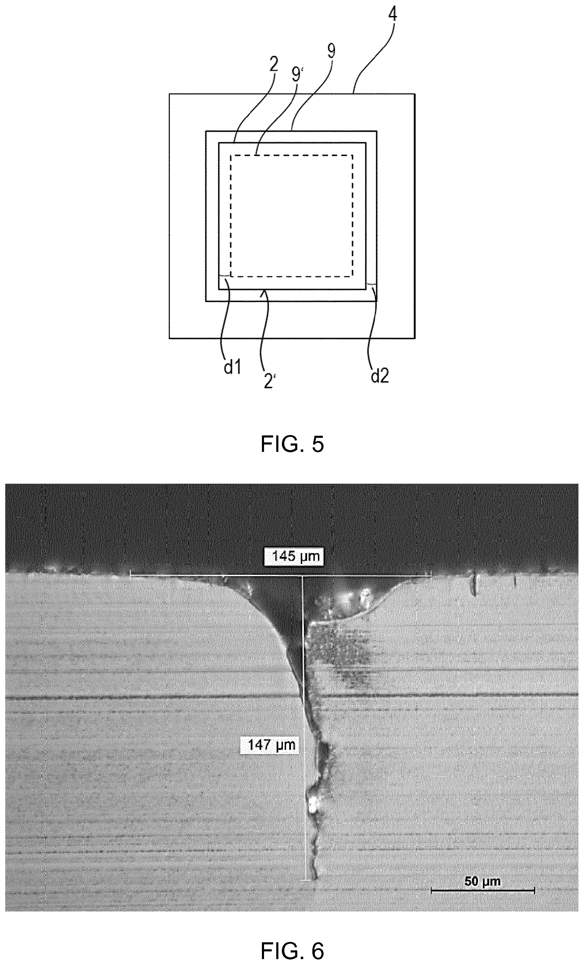

FIG. 5 zeigt schematisch eine Draufsicht auf eine erste Werkzeughälfte 4 eines erfindungsgemäßen Formwerkzeuges zur Verwendung im erfindungsgemäßen Verfahren. Ein Folienelement 2 ist in die erste Werkzeughälfte eingelegt worden. Das Folienelement 2 weist einen Rand 2'und einen inneren Randbereich auf. Der innere Randbereich erstreckt sich von dem Rand 2' bis zu der Länge der Strecke d1 (rechtwinklig vom jeweils betrachteten Ort des Randes 2') in Richtung des Folienelements 2.

Das Folienelement 2 weist ferner einen äußeren Randbereich auf, welcher unter Zuhilfenahme der Strecke d2 in analoger Weise wie der innere Randbereich definiert wird.

Die erste Werkzeughälfte 4 weist weiterhin das Temperierelement 9 auf, welches wie zuvor geschildert vorzugsweise innerhalb dieser Werkzeughälfte integriert ist. Das Temperierelement 9 ist nicht dazu eingerichtet, das Folienelement vollflächig aufzuheizen. Vielmehr folgt das Temperierelement 9 dem Rand 2' des Folienelements 2 mit einer zusätzlichen Erstreckung in Richtung des Folienelements 2 (Strecke d1) und von dem Folienelement weg (Strecke d2). Die Erstreckung des Temperierelements 9 in Richtung des Folienelements 2 ist durch das Bezugszeichen 9' gekennzeichnet. In der Zeichnung gemäß FIG. 5 sind die Begrenzung des inneren Randes des Folienelements 2 sowie die Erstreckung 9' des Temperierelements 9 in Richtung des Folienelements 2 deckungsgleich.

### Beispiele

Die Erfindung wird anhand der nachfolgenden Beispiele näher erläutert, ohne jedoch darauf beschränkt zu sein.

### Eingesetzte Materialien:

Material für die Hinterspritzschicht: Makrolon^{®} 2405 der Covestro Deutschland AG. Aromatisches Polycarbonat auf Basis von Bisphenol A mit einer MVR von 19 cm³/(10 min), bestimmt bei 300°C und 1,2 kg gemäß DIN ISO 1133:2012-03 und mit einer Vicat-Erweichungstemperatur, bestimmt bei 50 N, 50°C/h gemäß DIN ISO 306:2014-03, von 145°C. Zur Vorbehandlung wurde das Polycarbonat für 4 Stunden bei 110 °C in Trockenluft getrocknet.

### Material für die Folienelemente:

- Makrofol^{®} DE 1-4 der Covestro Deutschland AG, auf Basis von Bisphenol A-Polycarbonat (MVR 6,0 cm³/(10 min), bestimmt nach DIN ISO 1133:2012-03, bei 300 °C und 1,2 kg). Die Vicat-Erweichungstemperatur, bestimmt nach DIN ISO 306:2014 Methode B bei 120 K/h Aufheizzeit, lag bei 150 °C.
- Makrofol^{®} DE 1-1 der Covestro Deutschland AG, auf Basis von Bisphenol A-Polycarbonat (MVR 6,0 cm³/(10 min), bestimmt nach DIN ISO 1133:2012-03, bei 300 °C und 1,2 kg), einfach bedruckt mit der Farbe NORIPIHAN^{®} HTR N L 67628 der Firma Pröll KG, Deutschland. Die Vicat-Erweichungstemperatur, bestimmt nach DIN ISO 306:2014 Methode B bei 120 K/h Aufheizzeit, lag bei 150 °C.
- Bayfol^{®} CR 210 der Covestro Deutschland AG, auf Basis eines Blends aus Bisphenol A-Polycarbonat (MVR 6,0 cm³/(10 min), bestimmt nach DIN ISO 1133:2012-03, bei 300 °C und 1,2 kg) und Polyethylentherephthalat-Copolyester. Die Vicat-Erweichungstemperatur, bestimmt nach DIN ISO 306:2014 Methode B bei 120 K/h Aufheizzeit, lag bei 127 °C.
- Makrofol^{®} DE202 1-4 der Covestro Deutschland AG, auf Basis eines Copolycarbonats aus Bisphenol A-Polycarbonat und Bisphenol TMC-Polycarbonat (MVR 18 cm³/(10 min), bestimmt nach DIN ISO 1133:2012-03, bei 300 °C und 1,2 kg). Die Vicat-Erweichungstemperatur, bestimmt nach DIN ISO 306:2014 Methode B bei 120 K/h Aufheizzeit, lag bei 183 °C.
- Makrofol^{®} UV 503 9-2 der Covestro Deutschland AG, eine rot eingefärbte coextrudierte Folie auf Basis von Bisphenol A-Polycarbonat (MVR 12 cm³/(10min), bestimmt nach DIN ISO 1133:2012-03, bei 300 °C und 1,2 kg). Die Vicat-Erweichungstemperatur, bestimmt nach DIN ISO 306:2014 Methode B bei 120 K/h Aufheizzeit, lag bei 145 °C.
- Makrofol^{®} UV 244 1-1 der Covestro Deutschland AG, eine coextrudierte Folie auf Basis von Bisphenol A-Polycarbonat (MVR 6,0 cm³/(10 min), bestimmt nach DIN ISO 1133:2012-03, bei 300 °C und 1,2 kg) mit einer Funktionsschicht zum Schutz vor UV-Strahlung und mit integrierten Heizdrähten. Die Vicat-Erweichungstemperatur, bestimmt nach DIN ISO 306:2014 Methode B bei 120 K/h Aufheizzeit, lag bei 145 °C.

### Herstellung der Spritzgusselemente:

### Vergleichsbeispiele:

Auf einer 570C-Spritzgießmaschine der Firma Arburg wurde ein Spritzgusselement mit den Maßen 150 x 105 x 4 mm hergestellt. Dazu wurde als Folienelement eine auf Polycarbonat basierende Folie (siehe Tabelle A) mit den Maßen 70 x 120 mm so in die erste Werkzeughälfte eines Stahlwerkzeuges eingelegt, dass sie beim fertigen Formteil an den oberen Rand angrenzt und ansonsten mittig mit einem freien Rand von ca. 15 mm zu den beiden Seitenrändern und 40 mm zu dem unteren Rand des Formteils platziert ist. Die Folie wurde durch Anhaften an der polierten Oberfläche fixiert. Die Temperatur der Werkzeugwand lag auf der Auswerferseite (erste Werkzeughälfte) bei 100 °C und auf der gegenüberliegenden Düsenseite (zweite Werkzeughälfte) bei 80 °C.

Nach dem Schließen des Werkzeuges mittels der zweiten Werkzeughälfte wurde das Hinterspritzmaterial Makrolon^{®} 2405 mit einem maximalen Einspritzdruck von ca. 2500 bar in das Werkzeug gespritzt. Die Massetemperatur der Polycarbonatschmelze lag dabei bei 310 °C. Die Einspritzzeit betrug 3,5 Sekunden. Nach einer Nachdruckzeit von 8 Sekunden (Nachdruck: 900 bar) und einer Kühlzeit von 25 Sekunden wurde das Werkzeug geöffnet und das Formteil entnommen.

### Erfindungsgemäße Beispiele:

Auf einer 570C-Spritzgießmaschine der Firma Arburg wurde ein Formteil mit den Maßen 150x 105 x 4 mm hergestellt. Dazu wurde als Folienelement eine auf Polycarbonat basierende Folie (siehe Tabelle B) mit den Maßen 70 x 120 mm so in die erste Werkzeughälfte eines Stahlwerkzeuges eingelegt, dass sie beim fertigen Formteil an den oberen Rand angrenzt und ansonsten mittig mit einem freien Rand von ca. 15 mm zu den beiden Seitenrändern und 40 mm zu dem unteren Rand des Formteils platziert ist. Die Folie wurde durch Anhaften an der polierten Oberfläche bzw. bei Folien ab einer Dicke von 500 µm mit Hilfe eines kleinen Stücks doppelseitigen Klebebands in der Kavität fixiert. Die Temperatur der Werkzeugwand lag auf der Auswerferseite (erste Werkzeughälfte) bei 100 °C und auf der gegenüberliegenden Düsenseite (zweite Werkzeughälfte) bei 80 °C.

Nach dem Schließen des Werkzeuges mittels der zweiten Werkzeughälfte wurde die erste Werkzeughälfte mittels Wasserkühlung (Vorlauftemperatur 20 °C über den Soll-Temperatur) innerhalb einer Aufheizzeit auf eine Ist-Temperatur (Daten siehe Ergebnistabelle) aufgeheizt und gleichzeitig das Hinterspritzmaterial Makrolon^{®} 2405 mit einem maximalen Einspritzdruck von 2500 bar in das Werkzeug gespritzt. Die Massetemperatur der Polycarbonatschmelze lag dabei bei 310 °C. Die Einspritzzeit betrug 3,5 Sekunden. Nach einer Nachdruckzeit von 8 Sekunden (Nachdruck: 900 bar) wurde die Werkzeugwand innerhalb von 8 Sekunden auf eine Ist-Temperatur von 100 °C abgekühlt. Nach einer Kühlzeit von 25 Sekunden wurde das Werkzeug geöffnet und das Formteil entnommen.

### Beschichtung der Spritzgusselemente:

Alle Lösemittel wurden als technische Ware bezogen und nicht getrocknet eingesetzt.

### Vorbehandlung/Reinigung der Musterbauteile

Vor dem Beschichten wurden die Polycarbonatplatten (Spritzgusselemente) mit ionisierter Luft zum Entfernen von anhaftenden Verunreinigungen abgeblasen.

### Durchführung der Beschichtung

Die Beschichtung erfolgte in einem klimakontrollierten Beschichtungsraum unter den jeweiligen Vorgaben des Lackherstellers bei 23 bis 25°C und 40 bis 48% relativer Feuchte.

Die Musterplatten wurden mit sogenannten Iso-Tüchern (LymSat^{®} der Firma LymTech Scientific; gesättigt mit 70 Gew.-% Isopropanol und 30 Gew.-% deionisiertem Wasser) gereinigt, mit Isopropanol abgespült, 30 min an Luft getrocknet und mit ionisierter Luft abgeblasen.

Die Verarbeitung der Primer und Lacke erfolgt nach Herstellerangabe.

Der Festkörpergehalt des kommerziell erhältlichen Dickprimers SHP 470 FT 2050 der Firma Momentive Performance Materials wurde mit einer 1:1-Lösemittelmischung aus Diacetonalkohol und 1-Methoxy-2-propanol auf 5,2 %, gemessen nach der nachfolgenden Methode, eingestellt.

Der Feststoffgehalt der Lacke wurde mit Hilfe des Feststofftesters Mettler Toledo HB43 bestimmt, wobei eine gewogene Lackprobe so lange bei 140°C eingedampft wurde, bis Massekonstanz erreicht wurde. Der Feststoffgehalt ergibt sich dann in Prozent aus dem Quotienten Masse nach zu Masse vor dem Eindampfen. Der Feststoffgehalt des Lackes nach Härten des Lackes beträgt hierbei im einfachsten Fall Lackgewicht abzüglich Lösungsmittelgewicht.

Dieser Primer wurde einseitig im Flutverfahren auf die folienhinterspritzten PolycarbonatPlatten aufgebracht.

Die Beschichtung erfolgte per Hand. Hierbei wurde die zu schichtende flüssige SHP470-Primerlösung ausgehend von der oberen Kante des Spritzgusselementes in Längsrichtung über die Platte gegossen, während gleichzeitig der Ansatzpunkt des Primers auf der Platte von links nach rechts über die Plattenbreite geführt wurde. Die geprimerte Platte wurde senkrecht an einer Klammer hängend 30 Minuten bei 23°C bis zur Staubtrockene abgelüftet und anschließend 60 Minuten bei 130°C gehärtet.

Nach dem Abkühlen auf Raumtemperatur erfolgte die Beschichtung der geprimerten Fläche mit dem kommerziell erhältlichen AS 4700 F der Firma Momentive Performance Materials.

Der Festkörpergehalt des AS 4700 wurde mit einer 1:1 -Lösemittelmischung aus Isopropanol und n-Butanol auf 25,0 %, gemessen nach der obigen Methode, eingestellt.

Die Applikation wurde ebenfalls per Hand durchgeführt. Hierbei wurde der flüssige AS 4700-Lack ausgehend von der oberen Kante des Kleinteiles in Längsrichtung über die Platte gegossen, während gleichzeitig der Ansatzpunkt des Lackes auf der Platte von links nach rechts über die Plattenbreite geführt wurde. Die lackierten Platten wurden senkrecht an einer Klammer hängend nach einer Ablüftzeit von 30 Minuten bei 22°C und anschließend 60 Minuten bei 130°C gehärtet.

### Visuelle Abmusterung:

Die Musterplatten wurden nach Beschichtung visuell abgemustert und mittels einer Skala von 0 bis 6 bewertet, wobei 0 den besten und 6 den schlechtesten Wert darstellt. Es wurde untersucht, ob an der Grenzfläche zwischen eingelegtem Folienelement und dem Hinterspritzmaterial ein Spalt sichtbar ist. Die Ergebnisse sind in der nachfolgenden Tabelle wiedergegeben.

| **Folienelement** | Makrofol^{®} DE 1-4 250 µm Dicke | Makrofol^{®} DE 1-4 300 µm Dicke | Makrofol^{®} DE 1-1, bedruckt mit NORIPIHAN^{®} HTR N L 67628 250 µm Dicke | Makrofol^{®} DE 1-4 500 µm Dicke | Bayfol^{®} CR 210 250 µm Dicke | Makrofol^{®} DE202 1-4 125 µm Dicke | Makrofol^{®} UV 503 9-2 700 µm Dicke | Makrofol^{®} UV 244 1-1 375 µm Dicke | Makrofol^{®} DE 1-4 250 µm Dicke Nachdruckzeit verdoppelt |
|---|---|---|---|---|---|---|---|---|---|
| **Bezeichnung des Beispiels** | B1 | B2 | B3 | B4 | B5 | B6 | B7 | C | D |
| **Ohne Heizen** | 6 | 6 | 6 | 6 | 6 | 6 | -- | -- | -- |
| **Heiz-Temperatur [°C]** | | | | | | | | | |
| 153 | 1(2) | 3 | 3 | 2-3 | 2 | 4 | 2 | 3 | -- |
| 161 | 1(2) | 2 | 2 | 2 | 2 | 2 | 2 | 2 | -- |
| 170 | 1 | 2 | 1 | 2 | 2 | 2 | 1(2) | 2 | 1 |
| 178 | 1 | 1 | 1 | 1 | 2 | 1 | 1 | 1 | -- |
| 186 | 1 | 1 | 1 | 1 | 1(2) | 1 | 1 | 1 | -- |

Die Benotungskriterien lauten: 0: kein Übergang detektierbar; 1: Grenzfläche Folie/Substrat nur unter Ausspiegeln detektierbar; 2: Grenzfläche Folie/Substrat schwach erkennbar; 3: Grenzfläche Folie/Substrat leicht erkennbar; 4: Grenzfläche Folie/Substrat erkennbar, kein Spalt sichtbar; 5: sichtbarer Spalt; 6: sehr gut sichtbarer Spalt.

Bei einer Benotung von 3 und besser wird die visuelle Bemusterung als bestanden angesehen. Versuche ohne Heizen sind allesamt Vergleichsversuche.

Die Differenz der Heiztemperaturen zu den Vicat-Erweichungstemperaturen der eingesetzten Folienmaterialien ist nachfolgend wiedergegeben:

| Makrofol/Bayfol | Heiztemperatur [°C] | | | | |
|---|---|---|---|---|---|
| | 153 | 161 | 170 | 178 | 186 |

| | Differenz zwischen Heiz- und Vicat-Erweichungstemperatur [°C] | | | | |
|---|---|---|---|---|---|
| DE 1-4 | 3 | 13 | 20 | 28 | 36 |
| DE 1-1 | 3 | 13 | 20 | 28 | 36 |
| CR 210 | 26 | 34 | 43 | 51 | 59 |
| DE202 1-4 | -30 | -22 | -13 | -5 | 3 |
| UV 503 9-2 | 8 | 16 | 25 | 33 | 41 |
| UV 244 1-1 | 8 | 16 | 25 | 33 | 41 |

Versuche mit Heizen sind erfindungsgemäß, ausgenommen Beispiel B6 bei 153 °C und 161 °C Heiztemperatur.

Durch das dynamische Temperieren wurden Musterplatten erzielt, die keinen Spalt erkennen ließen und nur kaum erkennbare Übergänge zwischen Folienelement und Hinterspritzmaterial zeigten.

Die Musterplatten ohne dynamisches Temperieren zeigten deutliche Übergänge zwischen Folienelement und Hinterspritzmaterial. Eine leichte Blasenbildung durch verdampfendes Lösemittel nach Filmbildung im Spalt war sichtbar.

### Mikroskopische Untersuchungen:

Es folgten mikroskopische Untersuchungen an Mikrotomschnitten der Übergangsbereiche von Folienelement und Hinterspritzmaterial. Hierbei wird aus der Musterplatte eine Probe mit dem Übergangsbereich ausgesägt. Diese Probe wird mittels Mikrotom HM 355 S der Fa. Microm gerade geschnitten. Dieser Anschnitt wird dann unter einem Mikroskop DM 2700M der Fa. Leica mit 500facher Vergrößerung unter Auflicht im Hellfeld betrachtet, fotografiert und vermessen.

FIG. 6 zeigt die Querschnittsaufnahme einer Vergleichsprobe, welche nicht nach dem erfindungsgemäßen Verfahren hergestellt wurde: Beispiel B1 ohne Heizen. In der linken Bildhälfte befindet sich die Hinterspritzschicht und in der rechten Bildhälfte das Folienelement. Analog zu den Bezeichnungen in FIG. 2 betragen die Fugentiefe hier 147 µm und die Fugenbreite 145 µm.

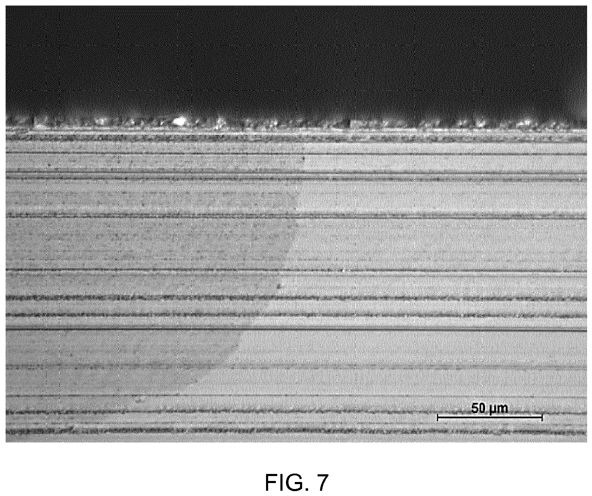

FIG. 7 zeigt eine mikroskopische Querschnittsaufnahme einer Probe, welche nach dem erfindungsgemäßen Verfahren hergestellt wurde: Beispiel B1 mit Heizung auf 170 °C. In der rechten Bildhälfte befindet sich die Hinterspritzschicht und in der linken Bildhälfte das Folienelement. Sie sind fugenlos miteinander verbunden.

Durch das dynamische Temperieren wird die umlaufende Spaltbildung signifikant reduziert. Es sind keine Störungen in der Beschichtung zu beobachten.

Die Musterplatten ohne dynamisches Temperieren zeigten eine deutliche Spaltausbildung zwischen dem Folienelement und dem Hinterspritzmaterial (siehe nachfolgende Tabelle). Dieser Kerbenbereich füllte sich mit der Beschichtung teilweise oder vollständig auf. Dadurch wurden die kritischen Lackdicken überschritten, wodurch es zu unvollständiger Abdunstung, die beim Härten zu Blasenbildung führt, kam. Im Übergangsbereich zeigte sich zudem eine leichte Blasenbildung durch verdampfendes Lösemittel nach der Filmbildung. Hinzu kommt, dass zu hohe Lackdicken üblicherweise spröde Bereiche bedeuten und zu reduzierter Lebensdauer führen.

| **Folienelement** | Makrofol^{®} DE 1-4 250 µm Dicke | | Makrofol^{®} DE 1-4 300 µm Dicke | | Makrofol^{®} DE 1-1, bedruckt mit NORIPIHAN^{®} HTR N L 67628 250 µm Dicke | | Makrofol^{®} DE 1-4 500 µm Dicke | | Bayfol^{®} CR 210 250 µm Dicke | | Makrofol^{®} DE202 1-4 125 µm Dicke | | Makrofol^{®} UV 503 9-2 700 µm Dicke | | Makrofol^{®} UV 244 1-1 375 µm Dicke | | Makrofol^{®} DE 1-4 250 µm Dicke Nachdruckzeit verdoppelt | |
|---|---|---|---|---|---|---|---|---|---|---|---|---|---|---|---|---|---|---|
| **Bezeichnung des Beispiels** | B1 | | B2 | | B3 | | B4 | | B5 | | B6 | | B7 | | C | | D | |
| | Spalt | OFB | Spalt | OFB | Spalt | OFB | Spalt | OFB | Spalt | OFB | Spalt | OFB | Spalt | OFB | Spalt | OFB | Spalt | OFB |
| **Ohne Heizen** | 147 | 145 | 160 | 115 | 110 | 136 | >200 | 201 | 82 | 125 | 125 | 133 | | | | | | |
| **HeizTemperatur [°C]** | | | | | | | | | | | | | | | | | | |
| 153 | 28 | 4 | <3 | 5 | <3 | <3 | | | | | 125 | <3 | | | 4 | <3 | | |
| 161 | 15 | <3 | | | | | | | | | 125 | <3 | | | | | | |
| 170 | <3 | <3 | <3 | <3 | | | <3 | <3 | <3 | <3 | <3 | <3 | 5 | <3 | <3 | <3 | <3 | <3 |
| 178 | <3 | 4 | | | | | | | | | | | | | | | | |
| 186 | <3 | <3 | <3 | <3 | | | | | | | | | | | <3 | <3 | | |

| | | | | | | | | | | | | | | | | | | |
|---|---|---|---|---|---|---|---|---|---|---|---|---|---|---|---|---|---|---|
| Spalt: Tiefe des von der Oberfläche ausgehenden Spalts; entspricht Maß mit dem Bezugszeichen 100 in FIG. 2 OFB: obere Fehlstellenbreite; entspricht Maß mit dem Bezugszeichen 200 in FIG. 2 | | | | | | | | | | | | | | | | | | |

## Patentansprüche

1. Verfahren zur Herstellung eines Spritzgusselementes (1) mit einer Vorderseite und einer Rückseite, wobei auf der Vorderseite des Spritzgusselementes (1) ein Folienelement (2) bündig zur Oberfläche einer Hinterspritzschicht (8) angeordnet ist,
wobei das Folienelement (2) einen Rand (2') aufweist und einen inneren Randbereich definiert, welcher sich von dem Rand (2') bis zu einer vorbestimmten Strecke d1, welche rechtwinklig zu dem Rand in Richtung des Folienelements (2) verläuft, erstreckt, wobei d1 ≥1% der Breite des Folienelements (2) und kleiner als die halbe Breite des Folienelements (2) ist
und wobei das Verfahren die folgenden Schritte in dieser Reihenfolge umfasst:
- Bereitstellen eines Formwerkzeuges (3), das im geschlossenen Zustand zwischen einer ersten Werkzeughälfte (4), welche die Vorderseite des Spritzgusselementes (1) abbildet, und einer zweiten Werkzeughälfte (5), welche die Rückseite des Spritzgusselementes (1) abbildet, eine komplementär zu dem Spritzgusselement (1) ausgebildete Kavität (6) definiert,
- Einlegen des Folienelementes (2) in die erste Werkzeughälfte (4),
- Schließen des Formwerkzeuges (3),
- Einspritzen eines plastifizierten thermoplastischen Kunststoffmaterials (7) in die Kavität (6) zur Ausbildung einer Hinterspritzschicht (8),
- Erstarrenlassen des Kunststoffmaterials (7),
- Öffnen des Formwerkzeuges (3) und
- Entnahme des Spritzgusselementes (1),
**dadurch gekennzeichnet, dass**
das Folienelement (2) eine Dicke von ≥ 20 µm bis ≤ 1000 µm aufweist,
das Folienelement (2) nur einen Teilbereich in der ersten Werkzeughälfte (4) bedeckt,
wenigstens während eines Teils des Einspritzens des plastifizierten thermoplastischen Kunststoffmaterials (7) wenigstens der innere Randbereich des Folienelements (2) durch ein oder mehrere in der ersten Werkzeughälfte (4) vorliegende Temperierelemente (9) mindestens auf eine Temperatur T von 20 °C unterhalb der Vicat-Erweichungstemperatur (bestimmt nach DIN ISO 306:2014 Methode B bei 120 K/h Aufheizzeit) des Materials des Folienelements (2) erwärmt wird und ein örtlich begrenztes Aufheizen des Werkzeugs mittels dynamischer Temperierung am Übergang Folienelement/Hinterspritzmaterial erfolgt, wobei nicht zu dem inneren Randbereich gehörende Bereiche des Folienelements (2) nicht auf die Temperatur T erwärmt werden.

2. Verfahren gemäß Anspruch 1, wobei die vorbestimmte Strecke d1 ≥ 1% bis ≤ 40% der Breite des Folienelements (2) beträgt.

3. Verfahren gemäß Anspruch 1 oder 2, wobei das Folienelement (2) weiterhin einen äußeren Randbereich definiert, welcher sich von dem Rand (2') bis zu einer vorbestimmten Strecke d2, welche rechtwinklig zu dem Rand in Richtung von dem Folienelement (2) entfernt verläuft, erstreckt, wobei d2 ≥ 1% bis ≤ 40% der Breite des Folienelements (2) beträgt und wobei in der ersten Werkzeughälfte (4) zu dem äußeren Randbereich korrespondierende Abschnitte zusammen mit dem inneren Randbereich auf die Temperatur T erwärmt werden.

4. Verfahren gemäß einem der vorhergehenden Ansprüche, wobei das thermoplastische Kunststoffmaterial (7) und/oder das Material des Folienelements (2) ein Polycarbonat umfassen.

5. Verfahren nach einem der vorhergehenden Ansprüche, wobei das Folienelement (2) eine Heizfolie, eine Folie mit Projektionsfunktion, eine Folie mit Streufunktion, eine farbige Folie, eine Folie mit optisch erkennbarer Oberflächenstruktur, eine Folie mit Funktionsadditivierung, eine Folie mit Antireflexfunktion, eine Folie mit Anti-Fingerprint-Funktion, eine Folie mit Antiglarefunktion, eine Folie mit Antibeschlagfunktion, eine Folie mit gegenüber dem Hinterspritzmaterial erhöhter chemischer Beständigkeit, eine Folie mit Barrierefunktion, eine IR-reflektive Folie, eine Folie mit IR-Absorptionseigenschaften, eine Polarisationsfolie, eine metallisierte Folie und/oder eine Super Retardation-Folie ist.

6. Verfahren nach einem der vorhergehenden Ansprüche, wobei das Folienelement (2) eine Dicke von ≥ 100 µm bis ≤ 700 µm aufweist.

7. Verfahren nach einem der vorhergehenden Ansprüche, wobei an dem entnommenen Spritzgusselement (1) anschließend wenigstens die Bauteilseite, auf der sich das Folienelement (2) befindet, mit einem Beschichtungsmittel beschichtet wird.

8. Spritzgusselement (1) das ein Verscheibungselement, eine transparente Abdeckung oder ein Verkleidungselement ist, erhältlich durch ein Verfahren gemäß einem der Ansprüche 1 bis 7, mit einer Vorderseite und einer Rückseite,
wobei auf der Vorderseite des Spritzgusselementes (1) ein Folienelement (2) bündig zur Oberfläche einer Hinterspritzschicht (8) angeordnet ist und das Folienelement (2) eine Heizfolie ist,
wobei das Folienelement (2) nur einen Teil der Oberfläche der Hinterspritzschicht (8) abdeckt
und wobei das Folienelement (2) und die Hinterspritzschicht (8) jeweils ein thermoplastisches Polymer umfassen,
**dadurch gekennzeichnet, dass**
das Folienelement (2) und die Hinterspritzschicht (8) fugenlos miteinander verbunden sind
oder für den Fall, dass eine Fuge zwischen Folienelement (2) und Hinterspritzschicht (8) vorliegt, diese Fuge eine Tiefe (100) von ≤ 12% der Dicke des Folienelements (2) und/oder eine Breite (200) von ≤ 12% der Dicke des Folienelements (2) aufweist.

9. Spritzgusselement (1) gemäß Anspruch 8, wobei das Folienelement (2) eine Heizfolie, eine Folie mit Projektionsfunktion, eine Folie mit Streufunktion, eine farbige Folie, eine Folie mit optisch erkennbarer Oberflächenstruktur, eine Folie mit Funktionsadditivierung, eine Folie mit Antireflexfunktion, eine Folie mit Anti-Fingerprint-Funktion, eine Folie mit Antiglarefunktion, eine Folie mit Antibeschlagfunktion, eine Folie mit gegenüber dem Hinterspritzmaterial erhöhter chemischer Beständigkeit, eine Folie mit Barrierefunktion, eine IR-reflektive Folie, eine Folie mit IR-Absorptionseigenschaften, eine Polarisationsfolie, eine metallisierte Folie und/oder eine Super Retardation-Folie ist.

10. Verwendung eines Formwerkzeugs (3) zur Durchführung des Verfahrens gemäß einem der Ansprüche 1 bis 7, wobei das Formwerkzeug (3) im geschlossenen Zustand zwischen einer ersten Werkzeughälfte (4), welche die Vorderseite eines Spritzgusselementes (1) abbildet, und einer zweiten Werkzeughälfte (5), welche die Rückseite des Spritzgusselementes (1) abbildet, eine komplementär zu dem Spritzgusselement (1) ausgebildete Kavität (6) definiert,
**dadurch gekennzeichnet, dass**
die erste Werkzeughälfte (4) ein oder mehrere Temperierelemente (9) umfasst, welche eingerichtet sind, um vorbestimmte Abschnitte der der Kavität (6) zugewandten ersten Werkzeughälfte (4) zu erwärmen und wobei weitere vorbestimmte Abschnitte der der Kavität (6) zugewandten ersten Werkzeughälfte nicht erwärmt werden.

## Claims

1. Process for the production of an injection-moulded element (1) with a front side and a reverse side, where there is, arranged on the front side of the injection-moulded element (1), a film element (2) flush with the surface of an in-mould-coating layer (8),
where the film element (2) has an edge (2') and defines an inner edge region which extends from the edge (2') over a predetermined distance d1 running at right angles to the edge in the direction of the film element (2), where d1 is ≥ 1% of the width of the film element (2) and is smaller than half of the width of the film element (2)
and where the process comprises the following steps in this sequence:
- provision of a mould (3) which in the closed state defines, between a first mould half (4) which replicates the front side of the injection-moulded element (1) and a second mould half (5) which replicates the reverse side of the injection-moulded element (1), a cavity (6) configured in a manner complementary to the injection-moulded element (1),
- placing of the film element (2) into the first mould half (4),
- closure of the mould (3),
- injection of a plastified thermoplastic material (7) into the cavity (6) in order to configure an in-mould-coating layer (8),
- allowing the plastics material (7) to solidify,
- opening of the mould (3) and
- removal of the injection-moulded element (1),
**characterized in that**
the thickness of the film element (2) is ≥ 20 µm to ≤ 1000 µm,
the film element (2) covers only a partial region in the first mould half (4),
and at least during one portion of the injection of the plastified thermoplastic material (7) at least the inner edge region of the film element (2) is heated by one or more temperature-control elements (9) present in the first mould half (4) at least to a temperature T of 20°C below the Vicat softening point (determined in accordance with DIN ISO 306:2014 method B at 120 K/h of heating time) of the material of the film element (2) and locally restricted heating of the mould is achieved by means of dynamic temperature control at the film element/in-mould-coating material boundary, where regions of the film element (2) that do not belong to the inner edge region are not heated to the temperature T.

2. Process according to Claim 1, where the predetermined distance d1 is ≥ 1% to ≤ 40% of the width of the film element (2).

3. Process according to Claim 1 or 2, where the film element (2) moreover defines an outer edge region which extends from the edge (2') over a predetermined distance d2 running at right angles to the edge in the direction away from the film element (2), where d2 is ≥ 1% to ≤ 40% of the width of the film element (2), and where, in the first mould half (4), sections corresponding to the outer edge region are heated together with the inner edge region to the temperature T.

4. Process according to any of the preceding claims, where the thermoplastic material (7) and/or the material of the film element (2) comprise(s) a polycarbonate.

5. Process according to any of the preceding claims, where the film element (2) is a heating film, a film with projection function, a film with scattering function, a coloured film, a film with optically discernible surface structure, a film comprising functional additives, a film with antireflective function, a film with anti-fingerprint function, a film with antiglare function, a film with antifogging function, a film with increased chemical resistance to the in-mould-coating material, a film with barrier function, an IR-reflective film, a film with IR absorption properties, a polarizing film, a metallized film and/or a super retardation film.

6. Process according to any of the preceding claims, where the thickness of the film element (2) is ≥ 100 µm to ≤ 700 µm.

7. Process according to any of the preceding claims, where, after removal of the injection-moulded element (1), a coating composition is then used for subsequent coating of at least the component side on which the film element (2) is present.

8. Injection-moulded element (1) which is a glazing element, a transparent covering or a cladding element, obtainable via a process according to any of Claims 1 to 7, with a front side and a reverse side,
where there is, arranged on the front side of the injection-moulded element (1), a film element (2) flush with the surface of an in-mould-coating layer (8) and the film element (2) is a heating film,
where the film element (2) covers only one portion of the surface of the in-mould-coating layer (8) and where the film element (2) and the in-mould-coating layer (8) respectively comprise a thermoplastic polymer,
**characterized in that**
the bonding of the film element (2) to the in-mould-coating layer (8) is jointless
or in the event that a joint is present between film element (2) and in-mould-coating layer (8), the depth (100) of this joint is ≤ 12% of the thickness of the film element (2) and/or the width (200) of said joint is ≤ 12% of the thickness of the film element (2).

9. Injection-moulded element (1) according to Claim 8, where the film element (2) is a heating film, a film with projection function, a film with scattering function, a coloured film, a film with optically discernible surface structure, a film comprising functional additives, a film with antireflective function, a film with anti-fingerprint function, a film with antiglare function, a film with antifogging function, a film with increased chemical resistance to the in-mould-coating material, a film with barrier function, an IR-reflective film, a film with IR absorption properties, a polarizing film, a metallized film and/or a super retardation film.

10. Use of a mould (3) for the conduct of the process according to any of Claims 1 to 7, where the mould (3) in the closed state defines, between a first mould half (4) which replicates the front side of an injection-moulded element (1) and a second mould half (5) which replicates the reverse side of the injection-moulded element (1), a cavity (6) configured in a manner complementary to the injection-moulded element (1),
**characterized in that**
the first mould half (4) comprises one or more temperature-control elements (9) equipped to heat predetermined sections of the first mould half (4) facing toward the cavity (6), and where other predetermined sections of the first mould half facing toward the cavity (6) are not heated.

## Revendications

1. Procédé de fabrication d'un élément (1) moulé par injection, comportant une face avant et une face arrière, un élément en feuille (2) étant disposé sur la face avant de l'élément (1) moulé par injection, à niveau avec la surface d'une couche (8) de décoration dans le moule,
l'élément en feuille (2) comportant un bord (2') et définissant une zone de bord intérieure, qui s'étend du bord (2') jusqu'à un segment prédéfini d1, qui court perpendiculairement au bord dans la direction de l'élément en feuille (2), d1 étant ≥ 1 % de la largeur de l'élément en feuille (2) et inférieur à la moitié de la largeur de l'élément en feuille (2)
et le procédé comprenant les étapes suivantes, dans cet ordre :
- fourniture d'un moule de formage (3), qui à l'état fermé définit entre une première moitié du moule (4), qui représente la face avant de l'élément (1) moulé par injection, et une seconde moitié du moule (5), qui représente la face arrière de l'élément (1) moulé par injection, une cavité (6) réalisée complémentaire à l'élément (1) moulé par injection,
- insertion de l'élément en feuille (2) dans la première moitié du moule (4),
- fermeture du moule de formage (3),
- injection d'un matériau plastique thermoplastique plastifié (7) dans la cavité (6) pour réaliser une couche (8) de décoration dans le moule,
- durcissement du matériau plastique (7),
- ouverture du moule de formage (3) et
- démoulage de l'élément (1) moulé par injection,
**caractérisé en ce que**
l'élément en feuille (2) présente une épaisseur ≥ 20 µm jusqu'à ≤ 1 000 µm,
l'élément en feuille (2) ne recouvre qu'une première zone partielle dans la première moitié du moule (4),
au moins pendant une partie de l'injection du matériau plastique thermoplastique plastifié (7), au moins la zone de bord intérieure de l'élément en feuille (2) est chauffée par un ou plusieurs éléments thermorégulateurs (9) se trouvant dans la première moitié du moule (4), au moins à une température T de 20 °C inférieure à la température de ramollissement de Vicat (déterminée selon DIN ISO 306:2014 Méthode B à 120 K/h de vitesse de montée en température) du matériau de l'élément en feuille (2), et une montée en température localement limitée du moule est réalisée par thermorégulation dynamique au niveau de la transition élément en feuille/matériau de décoration dans le moule, les zones n'appartenant pas à la zone de bord intérieure de l'élément en feuille (2) n'étant pas chauffées à la température T.

2. Procédé selon la revendication 1, dans lequel le segment prédéfini d1 est ≥ 1 % jusqu'à ≤ 40 % de la largeur de l'élément en feuille (2).

3. Procédé selon la revendication 1 ou 2, dans lequel l'élément en feuille (2) définit en outre une zone de bord extérieure, qui s'étend du bord (2') jusqu'à un segment prédéfini d2, qui court perpendiculairement au bord dans la direction s'éloignant de l'élément en feuille (2), d2 étant ≥ 1 % à ≤ 40 % de la largeur de l'élément en feuille (2) et, dans la première moitié du moule (4), des sections correspondant à la zone de bord extérieure sont chauffées à la température T en même temps que la zone de bord intérieure.

4. Procédé selon l'une des revendications précédentes, dans lequel le matériau plastique thermoplastique (7) et/ou le matériau de l'élément en feuille (2) comprend (nent) un polycarbonate.

5. Procédé selon l'une des revendications précédentes, dans lequel l'élément en feuille (2) est une feuille chauffante, une feuille à fonction de projection, une feuille à fonction de diffusion, une feuille colorée, une feuille à structure superficielle optiquement reconnaissable, une feuille à addition de fonction, une feuille à fonction anti-réfléchissante, une feuille à fonction anti-traces de doigt, une feuille à fonction antireflet, une feuille à fonction antibuée, une feuille présentant une résistance chimique accrue vis-à-vis du matériau de décoration dans le moule, une feuille à fonction barrière, une feuille réfléchissant les IR, une feuille ayant des propriétés d'absorption des IR, une feuille polarisante, une feuille métallisée et/ou une feuille à super-retard.

6. Procédé selon l'une des revendications précédentes, dans lequel l'élément en feuille (2) présente une épaisseur ≥ 100 µm jusqu'à ≤ 700 µm.

7. Procédé selon l'une des revendications précédentes, dans lequel la face du composant qui se trouve sur l'élément en feuille (2), suivant l'élément (1) moulé par injection et démoulé, est revêtue d'une composition de revêtement.

8. Élément (1) moulé par injection, qui est un élément de vitrage, un recouvrement transparent ou un élément d'habillage, pouvant être obtenu par un procédé selon l'une des revendications 1 à 7, comportant une face avant et une face arrière,
un élément en feuille (2) étant disposé sur la face avant de l'élément (1) moulé par injection, au niveau de la surface d'une couche (8) de décoration dans le moule, et l'élément en feuille (2) étant une feuille chauffante,
l'élément en feuille (2) ne recouvrant qu'une partie de la surface de la couche (8) de décoration dans le moule,
et dans lequel l'élément en feuille (2) et la couche (8) de décoration dans le moule comportent chacun un polymère thermoplastique,
**caractérisé en ce que**
l'élément en feuille (2) et la couche (8) de décoration dans le moule sont assemblés l'un à l'autre sans joint, ou, dans le cas dans lequel il existe un joint entre l'élément en feuille (2) et la couche (8) de décoration dans le moule, ce joint présente une épaisseur (100) ≤ 12 % de l'épaisseur de l'élément en feuille (2) et/ou une largeur (200) ≤ 12 % de l'épaisseur de l'élément en feuille (2).

9. Élément (1) moulé par injection selon la revendication 8, dans lequel l'élément en feuille (2) est une feuille chauffante, une feuille à fonction de projection, une feuille à fonction de diffusion, une feuille colorée, une feuille à structure superficielle optiquement reconnaissable, une feuille à addition de fonction, une feuille à fonction anti-réfléchissante, une feuille à fonction anti-traces de doigt, une feuille à fonction antireflet, une feuille à fonction antibuée, une feuille présentant une résistance chimique accrue vis-à-vis du matériau de décoration dans le moule, une feuille à fonction barrière, une feuille réfléchissant les IR, une feuille ayant des propriétés d'absorption des IR, une feuille polarisante, une feuille métallisée et/ou une feuille à super-retard.

10. Utilisation d'un moule de formage (3) pour mettre en œuvre le procédé selon les revendications 1 à 7, le moule de formage (3) définissant, à l'état fermé, entre une première moitié du moule (4) qui représente la face avant de l'élément (1) moulé par injection et une seconde moitié du moule (5) qui représente la face arrière de l'élément (1) moulé par injection, une cavité (6) réalisée complémentaire à l'élément (1) moulé par injection,
**caractérisée en ce que**
la première moitié du moule (4) comprend un ou plusieurs éléments thermorégulateurs (9), qui sont conçus pour chauffer des sections prédéfinies de la première moitié du moule (4) orientée vers la cavité (6), et d'autres sections prédéfinies de la première moitié du moule, orientée vers la cavité (6), n'étant pas chauffées.
